(19) Europäisches Patentamt

European Patent Office

Office européen des brevets

(11) **EP 1 054 092 A1**

(12) **EUROPEAN PATENT APPLICATION**

(43) Date of publication:
**22.11.2000 Bulletin 2000/47**

(51) Int Cl.[7]: **D04H 3/04**, D04H 3/12,
D04H 3/16, D04H 3/14,
D04H 13/00, D04H 1/74,
B29C 55/14, B29C 55/08

(21) Application number: **00401317.3**

(22) Date of filing: **15.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **17.05.1999 JP 13617699**
**25.06.1999 JP 17995999**
**09.07.1999 JP 19610399**
**08.09.1999 JP 25410499**

(71) Applicants:
• **NIPPON PETROCHEMICALS COMPANY, LIMITED**
**Tokyo (JP)**

• **POLYMER PROCESSING RESEARCH INSTITUTE LIMITED**
**Tokyo (JP)**

(72) Inventors:
• **Kurihara, Kazuhiko**
**Itabashi-ku (JP)**
• **Yazawa, Hiroshi**
**Kunitachi-shi, Tokyo (JP)**
• **Kobayashi, Kenichi**
**Kodaira-shi, Tokyo (JP)**

(74) Representative: **Boulinguiez, Didier**
**Cabinet Plasseraud**
**84, rue d'Amsterdam**
**75009 Paris (FR)**

(54) **Composite sheet having elasticity, elastic web made from thermoplastic elastomer, and method and apparatus of manufacturing the same**

(57)    A composite sheet comprises a nonwoven fabric and a rubber elastic material bonded onto the nonwoven fabric. The nonwoven fabric has nonelastic fibers aligned in one direction and has elongation of 100% or higher in a direction perpendicular to the aligned direction of the nonelastic fibers. The rubber elastic material is bonded to the nonwoven fabric in a pattern having orientation perpendicular to the aligned direction of the nonelastic fibers.

Fig.1

**Description**

BACKGROUND OF THE INVENTION

1. Field of the Invention:

The present invention relates to a elastic composite sheet formed by bonding a nonwoven fabric to an elastic material, more particularly to a elastic composite sheet preferably utilized for clothes, medical materials or sanitary materials or the like which require air permeability or moisture permeability such as elastic support bandages, supporters, sleeves of clothes, and elastic portions of diapers, to a method of manufacturing the same and to an apparatus for manufacturing the same.

Additionally, the present invention relates not only to a elastic web which is used as a material web to be bonded to a nonwoven fabric for the aforementioned composite sheet but also as a elastic web by itself, to a method of manufacturing the same and to an apparatus for manufacturing the same.

2. Description of the Related Art:

Various types of proposals have been made for a composite sheet of a nonwoven fabric and an elastic material (for example, Japanese Patent Laid-open No. 174764/96, Japanese Patent Laid-open No.132856/97, Japanese Patent Laid-open No.279453/97, and Japanese Patent Laid-open No.222759/99). These composite sheets, however, are formed by bonding a previously manufactured elastic product to a nonwoven fabric in which the elastic material is not arranged in a direction of elongation, thereby exhibiting unfavorable elasticity considering the amount of the elastic material. On the other hand, in terms of manufacturing the aforementioned composite sheets, since elastic materials generally have poor processability , it is difficult to manufacture a composite sheet at low cost with the conventional methods. For these reasons, there exists a need to reduce the used amount of the elastic material and to manufacture aforementioned composite sheets efficiently. Also, since manufacturing steps of the elastic materials are separated from a bonding step to the nonwoven fabric, the number of all the steps is increased, which prevents manufacturing at low cost. Additionally, since manufacturing steps of the elastic material products are separated from manufacturing steps of the nonwoven fabric, the elastic material product is once wound into a roll, and then spread again and supplied to an apparatus for bonding to the nonwoven fabric. Since the elastic material product has elasticity, it is difficult to control the winding and spreading tension. As a result, this can not be considered as an efficient manufacturing method.

In some cases, elasticity is necessary in only one of longitudinal and transverse directions depending on a application, and such a composite sheet is desired.

A conventional composite sheet uses a nonwoven fabric of a card web or an air layed web which is formed by short fibers, it has a low surface strength and tends to fall out of short fibers especially, if the sheet is manufactured by elongating only in one direction. Such a composite sheet also has poor productivity, resulting in a higher cost. Additionally, when producing a light weight sheet, a required strength can not be ensured. Particularly, with a fiber amount per square meter of 10g/$m^2$ or lower, since a sufficient tension can not be applied, it is very difficult to manufacture.

As a prior art in the field, there is a method in which a spun-bonded nonwoven fabric is slightly embossed and then stretched longitudinally to shrink in the width before further embossing (see Japanese Patent Laid-open No.132856/97). In this method, it requires two embossing steps, and is complicated and has poor productivity. Since the conditions of embossing are subtle, stable properties can not be obtained in many cases. Additionally, since the shrinkage of the nonwoven fabric in the width produces a larger thickness at both edges, it is difficult to manufacture a product at uniform thickness resulting in a reduced yield.

Japanese Patent Laid-open No.279453/97 and Japanese Patent Laid-open No.279460/97 also disclose prior arts in the field. The prior arts disclosed in these have a disadvantage similar to the aforementioned Japanese Patent Laid-open No.132856/97 that it is difficult to obtain a uniform product and the yield is low because of inadequate stretching which causes shrinkage in a width . These inventions derive various requirements for exhibiting elasticity only with a nonwoven fabric. While these inventions use a stretching factor from 1.4 to 4, the stretching factor defined in the present invention is assumed to be 2 or lower, considering shrinkage in the width direction as mentioned above.

A elastic composite sheets is used as clothes, medical supplies, sanitary materials, diapers or the like for human bodies or animals. They need to have an air permeability and moisture permeability in common for preventing stuffiness. These applications also require soft texture like a cloth. Thus, bonding a rubber elastic film directly to the nonwoven fabric can not eliminate the stuffiness.

Therefore, a thermoplastic elastomer nonwoven fabric (Japanese Patent Publication No.55249/86) or a net made from elastomer (Japanese Patent Publication No.59901/84) has been used, or strands of elastomer have been used in the aforementioned applications.

However, when a elastic web is made of nonwoven fabric, the random alignment of filaments results in a larger number of the filaments do not efficiently function for providing elasticity in a desired direction. Thus, the filaments in a direction requiring no elasticity are useless. When a net is used, similarly, a larger number of components do not function. It is also difficult to manufacture a web due to the poor processability. Furthermore, a thick web is too strong and is not suited for applications which requires soft elasticity.

On the other hand, the use of the elastomer strands as it is requires equipment and space for spreading a number of strands. Also, since the elastomer strands have elasticity, it is difficult to spread them out at high speed and complicates the processing.

Elasticity is often required only in one direction depending on its application, longitudinal ly or transversely.

SUMMARY OF THE INVENTION

It is an object of the present invention to provide a composite sheet of a nonwoven fabric and an elastomer which has large elasticity in one direction but has little elasticity in other directions.

It is another object of the present invention to provide a composite sheet which effectively uses a rubber elastic material and has large elasticity in one direction, as well as has air permeability.

It is a further object of the present invention to provide a elastic web which uses a thermoplastic elastomer of poor processability but has a small basis weight and elasticity in any desired direction and is preferably used not only as a web of the aforementioned composite sheet of the present invention but also as a web by itself.

It is a yet further object of the present invention to provide a method of manufacturing the aforementioned composite sheet and the elastic web of the present invention.

The composite sheet of the present invention has a nonwoven fabric and a rubber elastic material bonded onto the nonwoven fabric. The nonwoven fabric has nonelastic fibers aligned in one direction and has elongation of 100% or higher in a direction cross to the aligned direction of the nonelastic fibers. In other words, the nonwoven fabric is hardly deformed in the aligned direction direction of the fibers but is deformable in the direction cross to the aligned direction of the fibers. The rubber elastic material is bonded to the nonwoven fabric in a pattern having orientation cross to the aligned direction of the nonelastic fibers. This results in a composite sheet which is hardly deformed in the aligned direction of the fibers but has large elasticity in the direction cross thereto even with a reduced fiber amount per square meter of the nonwoven fabric and a reduced amount of the rubber elastic material used.

According to a preferred aspect of the composite sheet of the present invention, the rubber elastic material is in the form of strands of a thermoplastic elastomer aligned perpendicular to the aligned direction of the nonelastic fibers. It is preferable to align the elastomer strands with space between them in order to reduce the used amount of the elastomer. Full advantage of the aforementioned elasticity can be taken when a direction with large elasticity is substantially perpendicular to a direction with little elasticity. In this case, the aligned direction of the fibers may be longitudinal or transverse depending on required elasticity.

According to another preferred aspect of the present invention, the aforementioned pattern has air permeable portions in long shape in a direction perpendicular to the aligned direction of the nonelastic fibers. With this air permeable portions, air permeability is not prevented even when the rubber elastic material is used for expanding and contracting the sheet. In this case, a web made from thermoplastic elastomer can be used as the aforementioned rubber elastic material, and the aforementioned air permeable portions are formed as air holes.

When the rubber elastic material is a web made from thermoplastic elastomer, the web may be bonded onto the nonwoven fabric after the web is held at a temperature equal to or higher than a flow beginning temperature of the thermoplastic elastomer to eliminate its contractile force in a state where the web is elongated perpendicularly to the aligned direction of the nonelastic fibers. In this case, the air holes of the web may be fine since the air holes are enlarged with the elongation. Since the elongation direction of the web is perpendicular to the aligned direction of the nonelastic fibers, the air holes are also enlarged in that direction, resulting in improvement in utilization efficiency of the elastomer in the elasticity direction of the composite sheet. Also, since the elongation tension of the web is already lost in a state where the web is bonded to the nonwoven fabric, the elongation of the web does not affect the elastixity of the composite sheet. The web may be a film having openings long in a direction perpendicular to the aligned direction of the nonelastic fibers as air holes, or may be a nonwoven fabric including thermoplastic elastomers fibers aligned perpendicularly to the aligned direction of the nonelastic fibers.

In another preferred aspect of the composite sheet of the present invention, the rubber elastic material is formed by heating powder of a thermoplastic elastomer applied onto the nonwoven fabric in the pattern at a temperature equal to or higher than a flow beginning temperature of the thermoplastic elastomer to integrate the thermoplastic elastomer with the nonwoven fabric.

A method of manufacturing a composite sheet of the present invention comprises the a step of composing a nonwoven fabric made of nonelastic fibers aligned in one direction, and a step of bonding a rubber elastic material onto the nonwoven fabric with orientation cross to the aligned direction of the nonelastic fibers.

According to a preferred aspect of the method of manufacturing a composite sheet of the present invention, the nonwoven fabric composing step includes aligning the nonelastic fibers in a longitudinal direction of a nonwoven fabric to be formed, and the bonding step includes aligning strands of a thermoplastic elastomer in a width direction of the nonwoven fabric. Alternatively, the nonwoven fabric forming step may include aligning the nonelastic fibers in a width direction of a nonwoven fabric to be formed, and the bonding step may include aligning strands of a thermoplastic elastomer in a longitudinal direction of the nonwoven fabric. When the strands are aligned in a width direction of the nonwoven fabric in the bonding step, the bonding step may include forming the nonwoven fabric into a cylindrical shape, moving the nonwoven fabric formed into a cylindrical shape in the axis direction thereof, attaching a plasticized thermoplastic elastomer to an inner surface of the nonwoven fabric on the move along a circumference of the cylindrical shape, and solidifying the plasticized thermoplastic elastomer attached to the nonwoven fabric to provide the rubber elastic material.

In another preferred aspect of the method of manufacturing a composite sheet of the present invention, a web made of thermoplastic elastomer and having air holes is prepared separately from a nonwoven fabric made from nonelastic fibers and the web is bonded onto the nonwoven fabric. Before the bonding to the nonwoven fabric, the web is elongated in one direction, and in that state, the web is heated at a temperature equal to or higher than a flow beginning temperature of the thermoplastic elastomer to eliminate the contractile force of the web. In the bonding step, the web with its contractile force eliminated is bonded to the nonwoven fabric such that the aligned direction of the nonelastic fibers is perpendicular to the elongation direction of the web.

In a further preferred aspect of the method of manufacturing a composite sheet of the present invention, in the bonding step, powder of a thermoplastic elastomer is first prepared. Next, the powder is attached to the nonwoven fabric in a pattern having orientation perpendicular to the aligned direction of the nonelastic fibers and having air permeable portions. The nonwoven fabric with the powder attached thereto is heated at a temperature equal to or higher than the flow beginning temperature of the thermoplastic elastomer. The heated nonwoven fabric is hot-pressed with the powder. Thus, the grains of the powder are mutually adhered and the thermoplastic elastomer is integrated with the nonwoven fabric.

According to the method of manufacturing a composite sheet of the present invention described above, the aforementioned composite sheet of the present invention is conveniently and efficiently manufactured.

A elastic web of the present invention comprises one or a plurality of laminated elongated webs. The elongated webs have been eliminated the contractile force in an elongated state by holding one or a plurality of material webs including a thermoplastic elastomer and having air holes at a temperature equal to or higher than a flow beginning temperature of the thermoplastic elastomer in the elongated state. When a plurality of the elongated webs are laminated to constitute a elastic web, each of the plurality of material webs is elongated in one direction. The elongation directions thereof can be same or different from one another. The plurality of elongated webs which have been elongated in one direction to eliminate the contractile force are laminated such that the elongation directions thereof intersect.

According to the elastic web of the present invention, the material web is heated in an elongated state at a temperature equal to or higher than the flow beginning temperature of the thermoplastic elastomer to eliminate the contractile force, but the orientation of the web from the elongation is maintained. Thus, thermoplastic elastomer can be effectively utilized and the web has elasticity in a desired direction in accordance with the elongation direction. Also, the elongation thins the thickness of the web to result in a smaller basis weight. Additionally, since the material web has the air holes which are enlarged by the elongation of the web, the air permeability of the elastic web is not impaired even with small air holes.

Such a elastic web can be used by itself, but preferably, it can be used with connection to another elastic material, for example a nonwoven fabric, as a rubber elastic material in the composite sheet in the present invention.

A method of manufacturing a elastic web of the present invention comprises the steps of forming one or a plurality of material webs made of thermoplastic elastomer which have air holes, elongating the material web in at least one direction and heating the elongated web at a temperature equal to or higher than a flow beginning temperature of the thermoplastic elastomer to eliminate the contractile force of the material web in the elongated state. When the elastic web is manufactured from a plurality of material webs, each of the plurality of material webs is elongated in one direction in the step of elongation, the elongation directions thereof can be the same or different from one another. After the step of eliminating the contractile force of the material webs, the plurality of material webs with the contractile force eliminated are laminated such that the elongation directions intersect.

According to the method of manufacturing a elastic web of the present invention, the aforementioned elastic web of the present invention is conveniently and efficiently manufactured. The elongation of the material web is preferably performed at a temperature lower than the flow beginning temperature of the thermoplastic elastomer for uniformly elongating the material web. The method may include the step of heat-pressing the material web in which the material web is heated at a temperature equal to or higher than the flow beginning temperature of the thermoplastic elastomer to obtain a thinner elastic web to provide a flexible elastic web.

Additionally, according to one aspect of the present invention, an apparatus for manufacturing a composite sheet is provided.

The apparatus for manufacturing a composite sheet of the present invention comprises a spinning unit for forming a nonwoven fabric having nonelastic fibers akigned in one direction, a stretching unit for stretching the nonwoven fabric formed by the spinning unit in the aligned direction of the fibers, and a bonding unit for bonding a rubber elastic material onto the nonwoven fabric stretched by the stretching unit. The bonding unit is provided for bonding with orientation perpendicular to the aligned direction of the fibers forming the nonwoven fabric.

The spinning unit may align the fibers in a longitudinal direction of a nonwoven fabric to be formed, or in a transverse direction. Accordingly, the bonding unit is configured to discharge the material of the rubber elastic material in the transverse direction of the nonwoven fabric.

The apparatus for manufacturing a composite sheet of the present invention may include an elastic web forming unit for forming the rubber elastic material as a web having air permeable portions. In this case, the nonwoven fabric and the rubber elastic material are formed in separate steps and then they are bonded by the bonding unit. When the rubber elastic material is formed as a web, the web is bonded to the nonwoven fabric in a state where the web is elongated in one direction and heated at a temperature equal to or higher than a flow beginning temperature of the web material to eliminate the contractile force.

Additionally, the bonding unit of the apparatus for manufacturing a composite sheet of the present invention may include an attacher for attaching powder of a thermoplastic elastomer onto the nonwoven fabric, a heater for heating the nonwoven fabric with the thermoplastic elastomer powder attached thereto at a temperature equal to or higher than a flow beginning temperature of the thermoplastic elastomer, and a presser for pressing the heated nonwoven fabric and the thermoplastic powder. In this case, the attacher attaches the thermoplastic elastomer powder to the nonwoven fabric in a pattern having orientation perpendicular to the aligned direction of the fibers of the nonwoven fabric and having air permeable portions.

It should be noted that, in the present invention, "a longitudinal direction" of a elasticity direction of a composite sheet or a web, or a stretching direction of filaments means a machine direction or feeding direction of a nonwoven fabric or a web when the nonwoven fabric or web is manufactured, or when the nonwoven fabric is bonded to an elastomer. On the other hand, "a transverse direction" means a direction perpendicular to the longitudinal direction or a width direction of the nonwoven fabric or web.

Additionally, "elongation" in the present invention, includes not only elongation in one direction but also even elongation in two directions if an elongation factor in one direction is higher than that in the other direction.

"Fibers" in the present invention refers to fibers in a broad sense including both short fibers and continuous filaments. Long fibers include fibers branching out into some fibers like as a split web or a burst fiber.

"Nonelastic fiber" means the fiber not having rubber elasticity. The rubber elasticity means the nature that a elongated material contracts in substantially original length by releasing from elongating force at normal temperature. That is to say, "nonelastic fiber" means the fiber which keeps substantially elongated length even if the elongating force is released. However, it is not necessary that the fiber keeps the elongated length completely. The nonelastic fiber includes a fiber which contracts in elasticity 50 % or less preferably 20 % or less of elongation

The fibers in the present invention may be typical fibers made of polymers for synthetic fibers such as polypropylene, polyamide or polyester, fibers for natural fibers such as cotton or silk, or fibers for semisynthetic fibers such as rayon or acetate.

The nonwoven fabric in the present invention need to have elongation of at least 100% or higher in one direction. Examples of such a nonwoven fabric having elongation of 100% or higher include a nonwoven fabric having fibers aligned in one direction in which the elongation is 100% or higher in a direction perpendicular to the aligned direction of the fibers (Japanese Patent Laid-open No.174764/96, Japanese Patent Laid-open No.222759/99).

In the present invention, elongation of 100% or higher is provided in a direction perpendicular to the aligned direction of the fibers, while elongation is several % to several tens of % with large elongation stress and thus dimensional stability in the aligned direction of the fibers is obtained.

The nonwoven fabric in the present invention employs nonwoven fabrics made from long fibers such as nonwoven fabrics obtained by stretching spun bonded nonwoven fabrics or melt blown nonwoven fabrics, nonwoven fabrics described in detail as a longitudinally stretched nonwoven fabric or transversely stretched nonwoven fabric in earlier inventions of the present inventors (Japanese Patent Publication No.36948/91, Japanese Patent Laid-open No.204767/98 or the like), nonwoven fabrics having an alignment in one direction obtained by opening tows, or the like. These long fiber filaments have no fiber fall out even after elasticity repeated several hundreds of times and is suited for so-called lint-free use. The stretched nonwoven fabrics have a high strength and dimensional stability in the stretching direction and also have a gloss, and these characteristics from the stretching can be utilized in clothes or the like.

While the present invention uses the expression "a nonwoven fabric stretched in one direction", it includes even a nonwoven fabric stretched in two directions in which a stretching factor in one direction is higher than that in the other direction.

Additionally, nonwoven fabrics having short fibers aligned in one direction are suited for the nonwoven fabric in the present invention. The nonwoven fabrics made from short fibers have texture like cotton with good touch and are preferred for use in which the fabric is in direct contact with skin. The nonwoven fabrics having aligned fibers made from short fibers include carded webs or the like.

Elongation of at least 100%, preferably 200% is required in one direction for the nonwoven fabric in the present invention. The results of experiments show that the nonwoven fabric with elongation of 100% or higher in one direction provides repeated elasticity of 200% or higher as a composite sheet of that nonwoven fabric and an elastomer.

It is required that a nonwoven fabric made from nonelastic fibers used in the present invention has the fibers stretched and aligned substantially in one direction. The primary reason thereof is that the alignment of the fibers in one direction facilitates deformation perpendicular to the aligned direction thereof. Since the nonwoven fabric is hardly deformed in the aligned direction of the fibers, a composite sheet using such a nonwoven fabric has dimensional stability and is conveniently used as a product. Therefore, no particular limitations are imposed on the nonwoven fabric as long as the fibers are aligned in one direction.

The nonwoven fabrics having fibers aligned in one direction includes not only those having fibers aligned completely in one direction but also those having most fibers aligned in one direction to provide an alignment substantially in one direction. While the degree of the alignment is expressed in many ways, it is often represented with the ratio of a longitudinal strength to a transverse strength, i.e. a value obtained by dividing the longitudinal strength by the transverse strength, and the value is at least three, and preferably 10 or higher. Additionally, even a nonwoven fabric having fibers aligned and stretched both longitudinally and transversely can be utilized as a nonwoven fabric stretched in one direction in the present invention, if a stretching factor in one direction is higher than that in the other direction.

"Elongation" means as the same as "extension ratio" provided in JIS-L1085. That is, "elongation" represents the elongated length percentage at break when the 5 cm width of web is pulled in length direction with 30 cm/min. with gripping at 10 cm interval in the length direction.

"Thermoplastic elastomer" means the material which shows the rubber elasticity at nearly normal temperature although it is softened and flowed by heating.

"Strand" includes a comparatively heavy flexible material of endless or semi-endless as well as a comparatively fine flexible material of endless or semi-endless usually called a filament. The size of the filament is about several 100 tex or less, but the strand can have a size of about several 1000 tex.

The above and other objects, features and advantages of the present invention will become apparent from the following description with reference to the accompanying drawings which illustrate examples of the present invention.

BRIEF DESCRIPTION OF THE DRAWINGS

Fig. 1 is a perspective view of a composite sheet according to a first embodiment of the present invention;

Fig. 2 is a schematic perspective view of an example of a spinning apparatus of melt blow scheme preferably used for manufacturing a nonwoven fabric having filaments aligned longitudinally;

Fig. 3 is a schematic diagram of an example of a longitudinal stretching apparatus for stretching the nonwoven fabric (web) manufactured by the spinning apparatus shown in Fig. 1 in the direction of the filaments;

Fig. 4 is a partially cut away side view of an example of a bonding apparatus used for bonding strands of a thermoplastic elastomer transversely to one surface of the nonwoven fabric;

Fig. 5a and Fig. b are drawings for explaining a proximity stretching unit shown in Fig. 2 in detail;

Fig. 6 is a schematic sectional view of an example of a spinning apparatus of spun-bonding scheme;

Fig. 7 is a schematic diagram of another example of the longitudinal stretching apparatus for the web;

Fig. 8 is a schematic diagram of a further example of the longitudinal stretching apparatus for the web;

Fig. 9a is a diagram showing a spray head, viewed from the bottom, of a bonding apparatus for bonding an elastomer transversely to a nonwoven fabric used in a second embodiment of the present invention;

Fig. 9b is a side sectional view of the spray head shown in Fig. 9a;

Fig. 9c is a sectional view of the spray head shown in Fig. 9a viewed from the front;

Fig. 10 is a perspective view of a composite sheet according to a third embodiment of the present invention;

Fig. 11 is a schematic perspective view of an example of a transverse stretching apparatus of pulley type preferable for transversely stretching filaments with no orientation having many components aligned transversely;

Fig. 12 is a drawing showing an example of a transverse stretching apparatus of groove roll type;

Fig. 13 is a schematic perspective view of an example of a bonding apparatus for a web;

Fig. 14 is a perspective view of a composite sheet according to a fourth embodiment of the present invention;

Fig. 15 is a flow chart showing an example of a method for manufacturing the composite sheet shown in Fig. 13;

Fig. 16 is a schematic diagram of an example of an apparatus for forming slits in a film;

Fig. 17 is a front view of a cutter shown in Fig. 16;

Fig. 18a is a plan view of a net-like film used for the composite sheet shown in Fig. 13 before elongation;

Fig. 18b is a plan view of the net-like film used for the composite sheet shown in Fig. 13;

Fig. 19 is a schematic side view of another exemplary apparatus for transversely elongating the web;

Fig. 20 is a plan view in section of elongation pulleys and belts of a web takeover portion of a further exemplary apparatus for transversely elongating the web;

Fig. 21a is a plan view of another exemplary web having elasticity in the transverse direction;

Fig. 21b is a plan view of the web shown in Fig. 21a before elongation;

Fig. 22a is a plan view of a further exemplary web having elasticity in the transverse direction;

Fig. 22b is a plan view of the web shown in Fig. 22a before elongation;

Fig. 23 is a plan view of a composite sheet according to a fifth embodiment of the present invention;

Fig. 24 is a flow chart showing an example of a method of manufacturing the composite sheet shown in Fig. 23;

Fig. 25a is a plan view of a net-like film used for the composite sheet shown in Fig. 23 before elongation;

Fig. 25b is a plan view of the net-like film used for the composite sheet shown in Fig. 23;

Fig. 26 is a flow chart showing another exemplary method of manufacturing the composite sheet shown in Fig. 23;

Fig. 27 is a diagram showing a configuration of a proximity stretching apparatus used as a longitudinal elongation and heat treatment apparatus for the web;

Fig. 28 is a flow chart showing an example of a method of manufacturing a composite sheet according to a sixth embodiment of the present invention in which a nonwoven fabric is used an elastomer web;

Fig. 29 is a flow chart showing another exemplary method of manufacturing a composite sheet according to a sixth embodiment of the present invention in which a nonwoven fabric is used an elastomer web;

Fig. 30 is a partially cut away schematic perspective view of a position of a composite sheet manufactured with the steps shown in Fig. 28;

Fig. 31 is a diagram for explaining a method of bonding nonwoven fabrics having longitudinally aligned fibers such that the fibers thereof are orthogonal to each other;

Fig. 32a to Fig. 32e are diagrams showing various examples of material webs before elongation used for manufacturing elastic webs having elasticity in two or more directions according to a seventh embodiment of the present invention;

Fig. 33 is a schematic plan view of an example of an apparatus for elongating a web in biaxial or longitudinal and transverse directions and performing heat treatment;

Fig. 34 is a plan view of an exemplary elastic web having elasticity in at least two or more directions by overlaying a plurality of webs according to the seventh embodiment of the present invention;

Fig. 35 is a plan view of a composite sheet according to an eight embodiment of the present invention;

Fig. 36 is a flow chart showing an example of a method of manufacturing the composite sheet shown in Fig. 35;

Fig. 37 is a schematic diagram showing an exemplary apparatus for manufacturing the composite sheet shown in Fig. 35;

Fig. 38 is a schematic diagram showing another exemplary apparatus for manufacturing the composite sheet shown in Fig. 35;

Fig. 39 is a diagram showing a variation of a pattern of a rubber elastic material in the composite sheet shown in Fig. 35;

Fig. 40 is a plan view of a composite sheet according to a ninth embodiment of the present invention;

Fig. 41a is a schematic side view of an apparatus for forming strands in vertical direction on a horizontally stretched nonwoven fabric;

Fig. 41b is a schematic plane view of Fig. 41a;

Fig. 42a is a schematic side view of an example of a cross overlaying machine for overlaying strands on the nonwoven fabric, and shows the moving of the strands; and

Fig. 42b shows the moving of the nonwoven fabric in the cross overlaying machine shown in Fig. 42a.

## DESCRIPTION OF THE PREFERRED EMBODIMENTS

(First Embodiment)

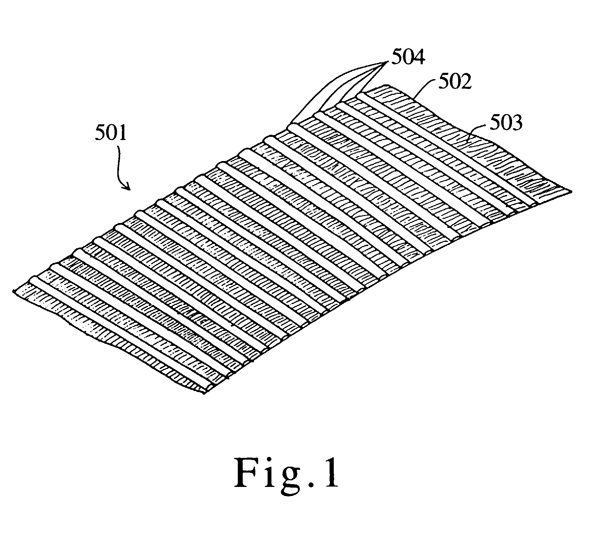

Referring to Fig. 1, there is shown composite sheet 501, serving as a first embodiment of the present invention, in which strands of thermoplastic elastomer 504 are bonded onto a surface of nonwoven fabric 502. Nonwoven fabric 502 is formed by aligning nonelastic filaments 503 substantially in parallel in a machine direction, i.e. in a longitudinal direction which is a carrying direction by a conveyor at the manufacture of nonwoven fabric 502 and then stretching them in the longitudinal direction. The strands of elastomer 504 are bonded onto nonwoven fabric 502 in a transverse direction substantially perpendicular to the aligned direction of filaments 503, i.e. in a width direction.

While nonwoven fabric 502 used in composite sheet 501 is slightly deformed longitudinally since filaments 503 are aligned and stretched longitudinally, it can be deformed considerably in the transverse direction which is substantially perpendicular to the aligned direction of filaments 503. Specifically, nonwoven fabric 502 having filaments 503 aligned and stretched in one direction has a characteristic by itself that it exhibits uniform and significant elongation without lack in the direction perpendicular to the aligned direction of filaments 503 but exhibits little deformation (elongation of approximately several %) in the aligned direction of filaments 503. The elongation at break of nonwoven fabric 502 in the direction perpendicular to the aligned direction of filaments 503 is 100% or higher, preferably 200% or higher, and most preferably 300% or higher. It is difficult for a nonwoven fabric having no aligned filaments 503 to have elongation at break of 100% or higher, and it is useless to bond to a thermoplastic elastomer. The results of studies have ensured that, with elongation at break of 100% or higher of the nonwoven fabric, a composite of it and an elastomer provides repeated elasticity of 200% or higher.

No particular limitations are imposed on nonwoven fabric 502 as long as filaments 503 are aligned in one direction. It should be noted that even a nonwoven fabric having filaments 503 aligned and stretched both longitudinally and transversely can be utilized as a nonwoven fabric stretched in one direction which is referred to in the present invention, if a stretching factor in one direction is higher than that in the other direction to lose a balance between the longitudinal and transverse directions.

Composite sheet 501 has a characteristic that the deformation is slight in the longitudinal direction due to filaments 503 stretched and aligned longitudinally but the deformation is significant in the transverse direction substantially perpendicular to the stretching direction. Also, since elastomer 504 is bonded to nonwoven fabric 502, the elasticity of elastomer 504 allows composite sheet 501 to be expanded transversely. In other words, composite sheet 501 in the embodiment is a sheet which is hardly elongated longitudinally but is elastic transversely.

As described above, the embodiment utilizes elastomer 504 formed as strands in the elasticity direction of composite sheet 501. It is preferable to form elastomer 504 as strands in that an expensive elastomer can be effectively used with a small amount. From the viewpoint of reducing the used amount of the elastomer, it is most preferable to align the strands of elastomer 504 with space between them. Elastomer 504 generally have unfavorable formability, and particularly, the thermoplastic elastomer capable of withstanding repeated elasticity have unfavorable formability. Thus, it is desirable to employ the simplest method of forming strands.

As a thermoplastic elastomer, an elastomer of polyolefin base, synthetic rubber, polyester base, polyamide base, polyurethane base or the like is used. Of these materials, synthetic rubber base or polyurethane base materials in which styrene and olefin base monomers are copolymerized are preferable as a thermoplastic elastomer in the present invention due to a high factor elasticity and a small stress at expanding. Particularly, a synthetic rubber of SEBS is most preferable.

As a polymer suitable for filaments 503, a thermoplastic resin such as polyethylene, polypropylene, polyester, polyamide, polyvinyl chloride base resin, polyurethane, fluorine contained resin, and denatured resins thereof can be used. Also, resins to which wet or dry spinning means is applicable can be used, such as a polyvinyl alcohol base resin or polyacrylonitrile base resin, and particularly, polyester and polypropylene are preferable.

Filaments 503 are long fiber filaments. The long fibers herein may be substantially long fibers and refer to those with an average length longer than 100 mm. The diameter of filament 503 is preferably 30 μm or smaller, and more preferably 25 μm or smaller since a diameter of 50 μm or larger represents rigidity and yarn mingling is insufficient. When a nonwoven fabric of significant strength is intended, the diameter of filament is preferably 5 μm or larger. The diameter and length of filament 503 are measured with a photomicrograph.

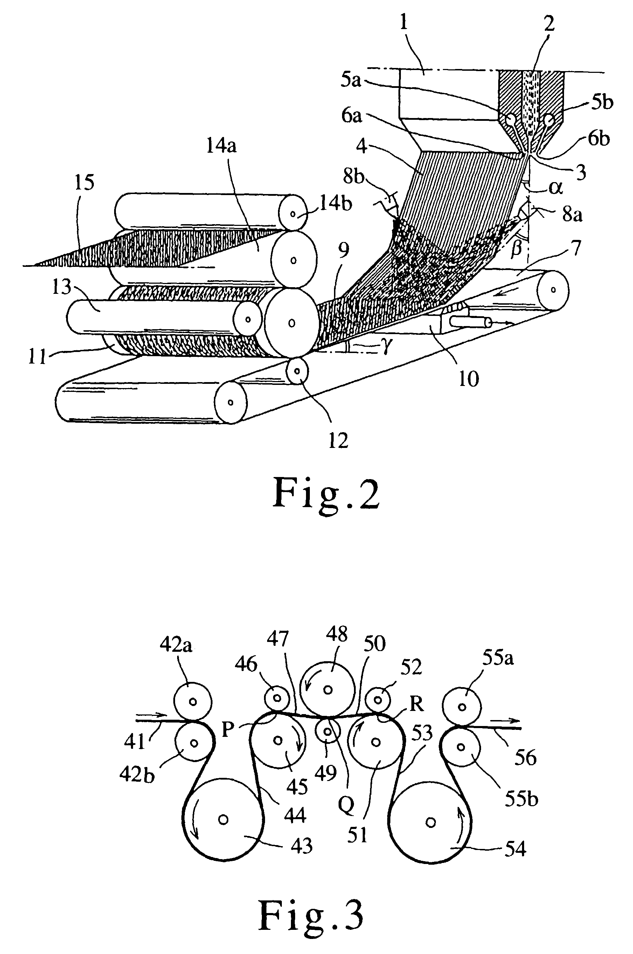

The method of manufacturing the composite sheet in the embodiment will be hereinafter described along with the description of an apparatus configuration shown in Fig. 2 to Fig. 4.

First, a spinning apparatus is described with reference to Fig. 2.

The apparatus shown in Fig. 2 mainly comprises a spinning unit including melt blow die 1 and conveyor 7, and a stretching unit including stretching cylinder 11, takeover nip rolls 14a, 14b or the like.

Melt blow (MB) die 1 has a number of nozzles 3 at its end in which molten resin 2 fed from a gear pump (not shown) is pushed out from nozzle 3 to form a number of filaments 4. In Fig. 2, melt blow die 1 is shown in sectional view for clearly showing its structure. Nozzle 3 is provided at its both ends with air chambers 5a, 5b. Heated air at high pressure heated at a melting point of the resin or higher is sent to air chambers 5a, 5b and ejected from slits 6a, 6b at the ends of air chambers 5a, 5b. This maintains filaments 4 pushed out from nozzle 3 in a draftable molten state, and the friction force caused by the ejection of the hot air achieves draft of filaments 4 to reduce the diameter of filaments 4. The aforementioned mechanism is similar to that of a spinning apparatus in a typical MB scheme. The temperature of the heated air at high pressure is set to be higher than the temperature of spinning of filaments 4 by 80 degrees or larger, preferably by 120 degrees or larger, and more preferably by 200 degrees or larger.

In the method of forming filaments 4 using melt blow die 1, the temperature of filaments 4 immediately after they are pushed out from nozzle 3 can be significantly higher than the melting point of filaments 4 by increasing the temperature of the heated air. As a result, the molecular orientation of filament 4 can be suppressed.

Air chambers 5a, 5b are formed to have different flowing amounts of air such that the flowing amount from one air chamber 5a is smaller than that from the other air chamber 5b, thereby inclining the feeding direction of filament 4 by angle $\alpha$ with respect to the pushing-out direction from nozzle 3. Such inclination of angle $\alpha$ in the feeding direction of filament 4 in this manner can be realized also by inclining melt blow die 1 itself, or by using both the methods.

Conveyor 7 is disposed for carrying filaments 4 pushed out from nozzle 3 below melt blow die 1. Spray nozzles 8a, 8b are provided between melt blow die 1 and conveyor 7. Spray nozzles 8a, 8b are provided for spraying atomized water from the font side and back side of filament 4 toward conveyor 7, respectively, which cools and solidifies filament 4. While a plurality of spray nozzles 8a, 8b are actually provided, only one nozzle 8a and one 8b are shown in Fig. 2 for avoiding complication. The jet of sprayed atomized water causes filament 4 to be inclined by angle $\beta$ which is larger than a and to be integrated on conveyor 7 as web 9.

Conveyor 7 is disposed with inclination of angle $\gamma$ from a horizontal plane such that the takeover direction of filaments 4 is lower than the arrival position. It should be noted that a cooling medium ejected from spray nozzles 8a, 8b does not necessarily include moisture, and cool air may be used. As described above, the effects of the inclination of conveyor 7 and the jet of air or atomized water allow filaments 4 in web 9 on conveyor 7 to be arranged longitudinally.

In this manner, the spinning of filaments 4 with inclination to the conveyor surface results in a favorable alignment of filament 4 on conveyor 7. Effective methods of inclining the spinning direction with respect to the conveyor surface include inclining nozzle 3 with respect to conveyor 7, inclining filaments 4 with the help of a fluid, inclining conveyor 7 with respect to the pushing-out direction of filaments 4, or the like. When it is difficult to obtain a favorable arrangement with only one of the aforementioned inclination methods, a plurality of methods may be performed in combination.

When filaments 4 are inclined with the help of a fluid, the fluid is desirably heated when used near nozzle 3. When the fluid is not used near nozzle 3, filaments 4 need be heated actively near nozzle 3. This is because the molecular orientation is suppressed as much as possible when the diameter of filament 4 is reduced with draft. While the molecular orientation of filaments 4 is suppressed as much as possible at the spinning step, individual filament 4 is desirably aligned longitudinally as much as possible.

As a fluid used for inclining filament 4, a cool fluid, particularly a fluid containing atomized water is most preferable near conveyor 7. This is because the rapid cooling of the spun filaments 4 prevents the effect of heat and the progression of crystallization. If the effect of heat caused by a heated fluid or the like remains, filaments 4 on conveyor 7 is subjected to heat treatment, thereby advancing the crystallization of filament 4 to reduce a stretching ability at later steps. The stretching ability is greatly affected by heat especially when filaments 4 are made from polyester, and also affected in the case of polypropylene. The water spray in the embodiment produces the rapid cooling effect due to cooling of molten filaments 4 by water to provide an enhanced stretching ability such as a higher stretching factor, a higher strength or the like. Additionally, since the water spray with spray nozzles 8a, 8b allows web 9 to be stuck to conveyor 7, the effects of stable spinning and an improved alignment of filaments 4 can be obtained.

So-called oily agents for spinning stretching, specifically oily agents capable of providing properties such as an stretching ability or removal of static electricity may be added to a liquid sprayed from spray nozzles 8a, 8b. This enables improvement in the stretching ability of filaments 4, a reduction in the amount of fuzz, and enhancement of the strength and elongation after stretching.

Since cooled web 9 has no self-adhesion, it may be scattered over conveyor 7 due to an air flow or the like. However, the scattering is prevented by sucking with negative pressure sucking nozzle 10 provided linearly on the back side of conveyor 7 in the width direction of the conveyor.

The types of conveyor 7 include a conveyor of a drum screen type which is frequently used for a melt blown nonwoven fabric other than a conveyor of flat belt type as shown. In the drum screen type, the inclination refers to that of the direction of filaments 4 ejected from nozzle 3 from the vertical direction toward a winding machine. As a material of conveyor 7, various materials used for manufacturing the nonwoven fabrics can be used such as metal wires or plastic wires. As a weave for forming its meshes, various methods used for manufacturing nonwoven fabrics can be used such as plain weave or diagonal. A particularly effective weave of a net is a satin weave in which meshes are arranged longitudinally. This enhances the effect of a longitudinal alignment of filaments 4 to improve the strength of web 9.

The sucking of web 9 with negative pressure sucking nozzle 10 also has the effect of removing heat remaining in web 9 in addition to the stabilization of web 9 which has been unstable due to the inclination. It is important to perform the negative pressure sucking in this case linearly in the width direction of conveyor 7 and with a small width. Specifically, the negative pressure sucking of web 9 in the melt blow scheme is performed mainly for enhancing the alignment of filaments 4, and aims to prevent filaments 4 from being scattered over conveyor 7 and to remove the heat of filament 4 on conveyor 7 for improving the stretching ability. Additionally, the negative pressure sucking removes the moisture attached to web 9, presenting the effect of reducing the influence of the moisture at the next stretching step. Since moisture greatly affects the stretching ability in polyester such that the stretching factor and the web strength after stretching are reduced, the negative pressure sucking is preferable.

Web 9 on conveyor 7 is sandwiched between stretching cylinder 11 heated at a stretching temperature and retaining rubber roll 12 on the back side of a loading surface of the conveyor and moved onto stretching cylinder 11, and then sandwiched between retaining rubber roll 13 and stretching cylinder 11 for close contact with stretching cylinder 11. Web 9 in close contact with stretching cylinder 11 is subjected to proximity stretching in the longitudinal direction using a speed difference between stretching cylinder 11 and takeover nip rolls 14a and 14b (14b is a rubber roll) thereafter, thereby producing longitudinally stretched nonwoven fabric 15.

The proximity stretching is a stretching scheme in which a web is stretched using a difference in surface speeds between two adjacent rolls with a short stretching distance (a distance from a starting point to an end point of stretching) being maintained, and the stretching distance is desirably 100 mm or shorter. Particularly, when the filaments are not linearly aligned longitudinally but warped to some extent, it is important to maintain the stretching distance as short as possible in the proximity stretching for effective stretching of individual filaments. The amount of heat required for the proximity stretching is typically provided by heating a roll for stretching. Heating with hot wind or infrared rays is used secondarily at a stretching point. Hot water, steam or the like may also be used.

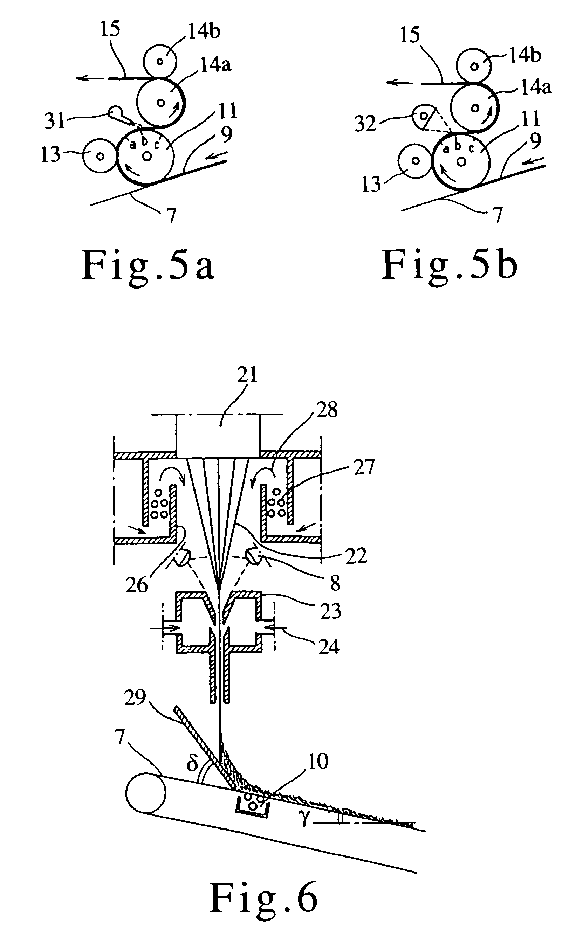

As described above, stretching cylinder 11, retaining rubber roll 13 and takeover nip rolls 14a, 14b constitute a proximity stretching unit. The proximity stretching unit is now described in greater detail with reference to Figs. 5a and 5b.

Stretching cylinder 11 is heated at a temperature suited for the stretching of web 9. For example, the temperature is 110 °C when the material of web 9 is polypropylene, while the temperature is 85 °C when the material is polyester. Web 9 is in close contact with stretching cylinder 11 by retaining rubber roll 13, and if the extent of the close contact is appropriate, the stretching point is straight in the width direction at point b where web 9 comes away from stretching cylinder 11, resulting in ideal proximity stretching. If the close contact is insufficient, the stretching point moves to a point toward stretching cylinder 11, resulting in unstable stretching. If the contact is too close, the stretching point varies between b point and c point, which also leads to unstable stretching. The extent of the close contact can be changed by heating retaining rubber roll 13 with an infrared heater or the like, or changing the adhesion of the surface of stretching cylinder 11, thereby making it possible to fix the stretching point near b point. These conditions vary depending on the speed of conveyor 7, the basis weight of web 9 or the like. In order to fix the stretching point at b point, hot wind generating machine 31 is effectively used to blow hot wind having a linear sectional view over b point as shown in Fig. 5a. Also, as shown in Fig. 5b, infrared line heater 32 for linearly collecting light with an infrared heater is effectively used for heating over b line.

Longitudinally stretched nonwoven fabric 15 obtained as described above is further stretched longitudinally, for example with a stretching apparatus as shown in Fig. 3. Stretching steps of longitudinally stretched nonwoven fabric 15 will be hereinafter described with reference to Fig. 3. The stretching apparatus shown in Fig. 3 may be supplied with longitudinally stretched nonwoven fabric 15 obtained with the spinning apparatus shown in Fig. 2 or with web 9 before proximity stretching. In Fig. 3, a simple expression "web" is used as a representative of them.

Web 41 is introduced into the stretching apparatus with nip rolls 42a, 42b, preheated by preheat roll 43, and introduced to stretching roll 45 as web 44. Nip rubber roll 46 is disposed opposite to stretching roll 45 and web 47 is stretched longitudinally between stretching roll 45 and stretching roll 48. The stretching distance is traveling distance PQ of the web defined by nip point P between stretching roll 45 and nip roll 46 at a first stage and nip point Q between stretching roll 48 and nip roll 49 at a second stage, and web 47 is stretched between P and Q.

When multi-stage stretching with this apparatus is required, stretching is further performed between stretching roll 48 and stretching roll 51. The stretching distance in this case is traveling distance QR of web 50 determined by point Q and nit point R between stretching roll 51 and nip roll 52. When heat treatment is required after the longitudinal stretching, web 53 may be subjected to heat treatment with heat treatment roll 54. Web 53 is taken over as stretched web 56 through nip rolls 55a, 55b.

As described above, an apparatus having the shortest possible stretching distance is suited for the longitudinal stretching of the nonwoven fabric. As shown in Fig. 3, the provision of nip rolls 46, 49 and 52 respectively for respective stretching rolls 45, 48 and 51 fixes stretching points to obtain stable stretching, allowing stretching at a higher factor. If nip roll 46 or the like is absent, the stretching point not only moves from P point toward preheat roll 43 to increase the stretching distance but also moves to cause interrupted stretching. A web having filaments aligned as longitudinally as possible is suited for the longitudinal stretching from the aforementioned principle. This is because a larger number of the filaments are held at both ends even with a constant stretching distance due to the longitudinally long filaments, and the strength of the web after the stretching is increased. In the apparatus shown in Fig. 3, heat for the stretching is basically provided by the heated rolls, while hot wind or infrared rays may be used in combination similarly to that shown in Fig. 5a or Fig. 5b. Additionally, a cover may be put over traveling distance PQ or QR of the web to heat the inside thereof with steam. Even when each of webs obtained by the spinning apparatus shown in Fig. 2 has a small width, they may be arranged in parallel and stretched using the stretching apparatus shown in Fig. 3, thereby making it possible to provide a stretched web with a large width.

It is generally important to fix the stretching points in stretching a web. If stretching points are not fixed, the stretching factor can not be increased since the entire web is not uniformly stretched and a sufficient web strength can not be obtained since the stretched web includes portions stretched at different factors. The width of a longitudinally stretched nonwoven fabric in finished form ranges from 1 m to 2 m, or larger. When such a wide stretched nonwoven fabric is manufactured, proximity stretching is facilitated if spinning is performed using a die of small width and pre-stretching is performed in the spun web manufacturing apparatus. The webs after the pre-stretching are aligned in parallel and subjected to main stretching to obtain a nonwoven fabric of large width. At this point, since a low stretching factor in the main stretching leads to slight shrinkage of the widths of the webs, the pre-stretched webs may be aligned parallel with only small overlapping portions which are not obtrusive. Additionally, since the pre-stretched webs have already been stretched longitudinally, the main stretching may use a relatively long stretching distance of proximity stretching.

In the multi-stage stretching, various means used for typical web stretching may be applied as stretching means at a second stage or later, other than the proximity stretching, i.e. various types of stretching schemes such as roll stretching, hot water stretching, steam stretching, hot plate stretching. The proximity stretching is not necessarily required because individual filaments already extend long in a longitudinal direction after a first stage.

In the method of manufacturing the longitudinally stretched nonwoven fabric, a stretching factor depends on types of polymers of filaments constituting a web, spinning means or aligning means for webs or the like. However, when any type or means is used, a stretching factor is selected such that a high degree of orientation and a high strength of a web can be achieved. The aforementioned stretching factor is defined by the following equation using marks provided on a web before stretching at predetermined intervals in a stretching direction.

$$\text{stretching factor} = (\text{inter-mark length after stretching})/ (\text{inter-mark length before stretching})$$

This stretching factor does not necessarily mean the stretching factor of the filaments as in typical stretching of long fiber filament yarn.

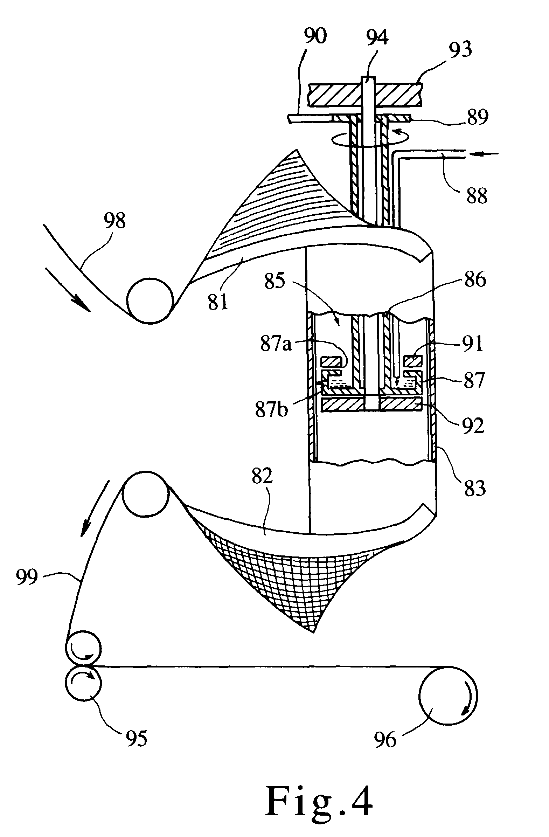

The nonwoven fabric thus stretched longitudinally is subjected to spin of a thermoplastic elastomer in a molten state or rich dope, i.e. in a plasticized state by an apparatus to bond the nonwoven fabric to the elastomer. Next, an example of a bonding apparatus will be described with reference to Fig. 4.

The apparatus shown in Fig. 4 comprises forming portion 80 for cylindrically forming nonwoven fabric 98 having filaments aligned and stretched longitudinally, and elastomer spinning portion 85 for spinning a thermoplastic elastomer toward nonwoven fabric 98 onto the inner side of nonwoven fabric 98 which has been formed into cylindrical shape.

The forming portion means the mechanism to forms a film, nonwoven fabric, web or the like which has a plane shape into a tubular shape continuously. The mechanism is used in a forming, filing and closing machine for manufacturing a bag with a film, nonwoven fabric, web or the like, and is called a sailor former or a former because it resembles a sailor color in shape.

Forming portion 80 comprises guide cylinder 83 with its axis direction being arranged in a substantially vertical direction, and guides 81, 82 attached respectively to the top end and bottom end of guide cylinder 83. Since each of guides 81, 82 may be the same as that used for forming a packaging film into cylindrical shape in a forming, filing and closing machine, detailed description thereof is omitted. Lower guide 81 is provided to open the tubular nonwoven fabric 98 which is cut at one point along axial direction. Although, lower guide 81 is the same as upper guide 82 attaching upside down case of Fig. 4, various mechanism can be used as the lower guide. For example, a opening machine using a triangle flame as the lower guide is available. The opening machine is common to be used for tubular film manufactured by inflation film process. Paired rollers 95 are disposed below guide cylinder 83 for taking out composite sheet 99 obtained after passing through forming portion 80.

When nonwoven fabric 98 after longitudinal stretching with the aforementioned stretching apparatus is supplied to forming portion 80, associated with the operation of paired rollers 95 for taking out nonwoven fabric 98, nonwoven fabric 98 is formed into cylindrical shape with upper guide 81 and then fed downward along the inner wall of guide cylinder 83. Nonwoven fabric 98 is again spread into flat shape with lower guide 82 and then wound around winding roller 96 via paired rollers 95.

Elastomer spinning portion 85 has spinning head 87 provided rotatably about an axis in a substantially vertical direction. Spinning head 87 is attached to rotation axis 86 rotatably supported coaxially with support shaft 94 fixed to frame 93 of the apparatus on the outer periphery of support shaft 94, and is disposed inside guide cylinder 83.

Pulley 89 is attached to the top end of rotation axis 86 and transfers rotation via belt 90 from a rotation driving source, not shown, to cause rotation axis 86 to be rotated around support shaft 94. In the present embodiment, spinning head 87 is driven by pulley drive mechanism to make an overhaul easy. However, it is possible for the spinning head driving mechanism to constitute more simply by connecting support shaft 94 to a rotary driving source. Spinning head 87 is a hollow and cylindrical member which has a top surface having annular opening 87a, bottom surface being covered, and a peripheral wall having nozzle 87b through the wall. While the present embodiment illustrates the spinning head having cylindrical shape, the shape is not limited to cylindrical shape, if it is possible to spin the elastomer by centrifugal force. For example, the spinning head may be shaped into a hollow prism which has three, four or more faces, or a hollow propeller-like shape which has two, three or more arms. In every case, the spinning head is rotated around the center and the elastomer is spun through the outer wall by centrifugal force. Preferably the shape of the spinning head should be cylindrical shape, because other shapes make the spinning by making turbulence around the spinning head.

Moreover, if it is undesirable that plasticized elastomer is exposed to the air, the spinning head may be made airtight. In this case for example, support shaft 94 may consist of a outer pipe, a inner pipe and a drive shaft located inside the inner pipe and connected to the spinning head. The plasticized elastomer is supplied into the spinning head through a space between the outer pipe and the inner pipe, and the spinning head is rotated by rotating the drive shaft.

A plurality of nozzles 87a may be formed in accordance with pitches of elastomer strands on the nonwoven fabric 98.

Disposed above spinning head 87 is supply pipe 88 with its end (bottom end) being inserted into the spinning head 87 through opening 87a. Supply pipe 88 is connected to a extruder or a gear pump (not shown) such that the elastomer is supplied into spinning head 87 through supply pipe 88 in a molten state or rich dope, i.e. in a plasticized state. Heaters 91, 92 are respectively disposed above and below spinning head 87 for heating spinning head 87 to maintain the temperature of the elastomer in spinning head 87.

Next, the operation of the bonding apparatus will be described. As described above, nonwoven fabric 98 in sheet shape is formed into cylindrical shape with upper guide 81, and fed downward along the inner wall surface of guide cylinder 83. In other words, nonwoven fabric 98 formed into cylindrical shape is moved along the axis direction of guide cylinder 83 along guide cylinder 83.

At this point, when the elastomer is supplied from supply pipe 88 to spinning head 87 at the same time spinning head 87 is rotated, the elastomer supplied to spinning head 87 is spun from nozzle 87b by centrifugal force. As a result, the elastomer is spun onto the inner surface of nonwoven fabric 98 formed into cylindrical shape, then solidified on nonwoven fabric 98, and bonded to nonwoven fabric 98.

In this manner, the spinning of the elastomer using centrifugal force caused by the rotation of spinning head 87 makes the elastomer attached onto the inner surface of nonwoven fabric 98 along the periphery of guide cylinder 83. Since nonwoven fabric 98 is fed downward in the meantime, the elastomer is attached onto the inner surface of nonwoven fabric 98 in spiral form.

Thereafter, nonwoven fabric 98 is spread into flat shape after passing through lower guide 82. The elastomer is attached onto nonwoven fabric 98 in a strand form aligned substantially perpendicular to the aligned direction of the filaments of nonwoven fabric 98 by appropriately setting the feeding speed of nonwoven fabric 98 and the rotation speed of spinning head 87. This results in composite sheet 99 which is hardly stretched in the fiber direction of the filaments but is stretched in the aligned direction of the elastomer strands.

The aforementioned method in which nonwoven fabric 98 is formed into cylindrical shape and the elastomer is spun to the inner surface of nonwoven fabric 98 from rotating spinning head 87 is suitable for manufacturing the composite sheet of the present invention since the elastomer can be easily and rapidly formed in strand shape. The strands of the elastomer are aligned transversely in which the composite sheet is expanded, so that even a small amount of elastomer can efficiently exert its elasticity in the transverse direction. Additionally, since the composite sheet is formed by bonding nonwoven fabric 98 to the elastomer, the elasticity is not deteriorated even with a small fiber amount per square meter of nonwoven fabric 98, thereby making it possible to reduce the amount of nonwoven fabric 98.

In the embodiment shown in Fig.4, nonwoven fabric 98 passed through guide 81 is supplied directly to guide cylinder 83. Generally, in case of forming a web in tubular, a heat sealing mechanism which seals both sides ends of the web with each other is provided between guide 81 and guide cylinder 83. However, in the present invention, the heat sealing mechanism is not necessary, since the present invention does not purpose to make the nonwoven fabric tubular shape.

According to the present invention, it is an ideal that the width of nonwoven fabric 98 is equal to the internal circumference length of guide cylinder 83. However, it is difficult to equalize the width completely, since the side end of nonwoven fabric 98 is irregular or nonwoven fabric 98 meanders in guide cylinder 83. Thus, it is preferable to keep of nonwoven fabric 98 wider than the internal circumference length of guide cylinder 83, because a gap will be formed between the both sides ends of nonwoven fabric 98 in guide cylinder 83, if the width of nonwoven fabric is narrower. If the gap is formed, the elastomer is sprayed directly and adhered on guide cylinder 83 at the gap. In a result, the moving of nonwoven fabric is impeded, because the elastomer sprayed on guide cylinder 83 pulls nonwoven fabric 98.

Additionally, the strand of the elastomer spun on nonwoven fabric 98 make contracting of nonwoven fabric 98 in the length direction of the strand, because the strand is adhered to nonwoven fabric 98 in a state of expanded by centrifugal force and is released from centrifugal force after the elastomer is attached on. In short, the strand contracts after attaching onto nonwoven fabric 98. Thus, even if the width of nonwoven fabric 98 is equal to the internal circumference length of guide cylinder 83, the gap is formed in the lower portion of guide cylinder 83 by width reduction of nonwoven fabric 98 as the result of the contracting of the strand. For the reasons stated above, it is practicable to keep width of nonwoven fabric 98 wider than the internal circumference length of guide cylinder 83.

In this case, preferably nonwoven fabric 98 is fed to guide cylinder 83 without sealing the overlapped portions of nonwoven fabric 98 in order not to make a between the both sides ends of nonwoven fabric 98 even if the width is shortened.

It is necessary to cut open the composite sheet obtained by spraying the elastomer to nonwoven fabric 98 in order to return it from cylindrical shape to plane shape, because the both sides ends of nonwoven fabric 98 are connected each other with the strand of the elastomer, even if the both sides ends are not heat sealed. To open the composite sheet, at least one cutter (not shown) must be provided to cut the composite sheet along its moving direction. The composite sheet cut by the cutter is then opened into plane shape by lower guide 82.

The composite sheet may be cut into more than one piece by using a plurality of cutters, when the composite sheet is cut to open. In this case, lower guide 82 may be supersede by a simpler mechanism such as some pairs of turn rolls. Cutting the composite sheet into some pieces has the advantage of simplifying the mechanism, if the narrower width of the obtained composite sheet is not a problem.

As described above, description has been made using the respective apparatuses shown in Fig. 2 to Fig. 4 for a method of manufacturing the composite sheet in which the nonwoven fabric has the filaments aligned and stretched longitudinally on which the thermoplastic elastomer is aligned in strand shape in the direction substantially perpendicular to the aligned direction of the filaments. While the embodiment employs the nonwoven fabric having the filaments aligned and stretched longitudinally as mentioned above, the spinning apparatus and stretching apparatus are not limited to those shown in Fig. 2 and Fig. 3 as long as they can manufacture such a nonwoven fabric. In the following, a modification example of the spinning apparatus and the stretching apparatus is described.

First, a variation of the spinning apparatus is described with reference to Fig. 6. While the spinning apparatus shown in Fig. 2 uses a melt blow die to provide the filaments with draft tension, the spinning apparatus shown in Fig. 6 employs a spun-bonding (SB) method in a narrow sense to provide the filament with draft tension. In Fig. 6, components identical to those in Fig. 2 are designated with the same reference numerals for description.

In the SB spinning, a number of filaments 22 spun from spun-bonding die 21 having a number of spinning holes are sucked by ejector 23 with air 24, and then integrated on conveyor 7 accompanied with the accelerated air by a nozzle of ejector 23. As shown in Fig. 6, heat insulating wall 26 having heater 27 disposed therein is provided below spun-bonding die 21. With this structure, heated air 28 heated at a temperature higher than the melting point of filaments 22 flows along with the feeding of spun filaments 22 to prevent filament 22 from being cooled directly below nozzles.

Filaments 22 are cooled by air including atomized water from spray nozzle 8 immediately before they are fed to ejector 23, and are introduced into ejector 23 with the cooling being maintained. If spray nozzle 8 is absent, filaments 22 are mutually fused within ejector 23. Air 24 may include atomized water in ejector 23 instead of spray nozzle 8.

Filaments 22 accelerated at ejector 23 are turned by barrier wall 29 disposed with inclination to a loading surface of conveyor 7, sucked by negative pressure sucking nozzle 10, and integrated on inclined conveyor 7 similarly to the example shown in Fig. 2. This improves the orientation of filaments 22. While Fig. 6 shows ejector 23 disposed vertically, the flowing direction from ejector 23 itself may be inclined.

Heat insulating wall 26 directly below the nozzles of spun-bonding die 21 shown in Fig. 6 is an introduction path of heated air 28 heated by heater 27 and serves as a heat insulating cylinder. However, as another method of holding the portion directly below the nozzles at high temperature, the portion directly below the nozzles may be directly heated by an infrared lamp or the like. In any case, characteristically, the portion directly below the nozzles is maintained at high temperature to suppress the molecular orientation of filaments 22 even when the diameter of filament 22 is reduced with draft. Filament 22 has suppressed molecular orientation to improve the stretching ability thereafter if the temperature of heated air 28 shown in Fig. 6 is higher than the spinning temperature (die temperature) of filaments 22 by 80 °C or larger, more preferably by 120 °C or larger.

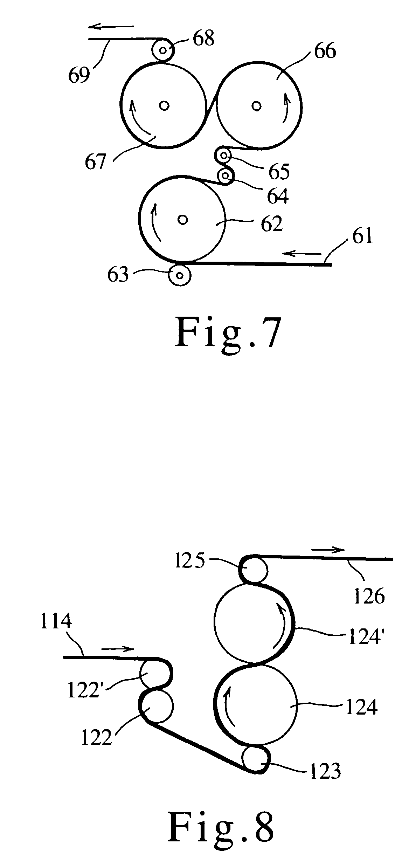

Next, a variation of the stretching apparatus is described with reference to Fig. 7. In a stretching apparatus shown in Fig. 7, web 61 is preheated by heating cylinder 62. Small diameter roll 63 rotated at a surface speed equal to the surface speed of heating cylinder 62 is disposed in close contact with cylinder 62. The stretching of web 61 is performed between small diameter roll 64 and small diameter roll 65. Thereafter, web 61 is subjected to heat treatment with cylinder 66, cooled by cooling cylinder 67, and taken over as longitudinally stretched web 69 via nip roll 68. In such proximity stretching, since the stretching is performed in an extremely short distance with small diameter rolls 64 and 65, shrinkage in width is small and stretching points can be fixed.

Next, another variation of the stretching apparatus is described with reference to Fig. 8. In the stretching apparatus shown in Fig. 8, web 114 is introduced to rolls 124, 124' under heating via turn roll 123 from pinch rolls 122, 122'. The space between respective rolls 124, 124' is adjusted to be smaller than the thickness of web 114. Roll 124' in the later stage is rotated at a rotation speed slower than that of roll 124 at the former stage. Web 114 is pressed by two rolls 124, 124' at the same time it is stretched (rolled) longitudinally with a difference in rotation speeds between respective rolls 124, 124'. Thereafter, web 114 is nipped by pressing roll 125 with heat treatment being performed by roll 124' at the later stage, and then taken over as rolled web 126. This rolling scheme is characterized in that even an original nonwoven fabric having some nonuniform fiber directions can be stretched at a high factor, and it is possible to provide absolutely different properties such as a gloss like pearls put on the entire rolled nonwoven fabric.

(Second Embodiment)

A second embodiment is an example for manufacturing a composite sheet in which a nonwoven fabric has filaments aligned and stretched longitudinally on which a thermoplastic elastomer is aligned in strand shape in a direction substantially perpendicular to the aligned direction of the filaments, similarly to the first embodiment.

However, the second embodiment differs from the first embodiment in a bonding step of the elastomer to the nonwoven fabric.

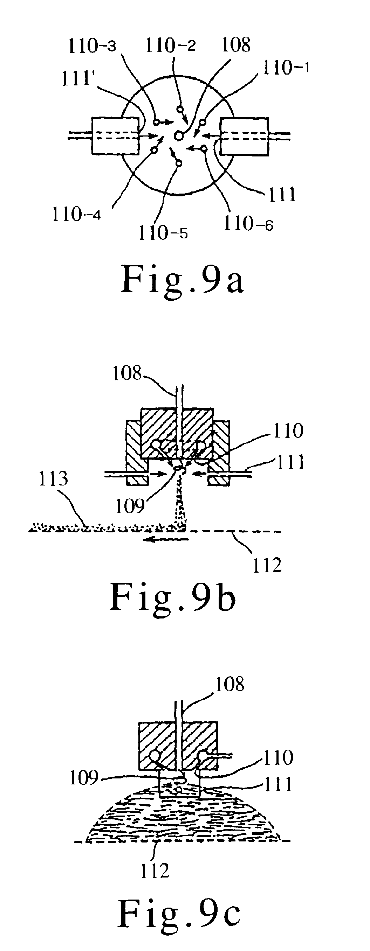

The embodiment will be hereinafter described with reference to a bonding apparatus shown in Figs. 9a to 9c.

In Figs, 9a to 9c, spray port 108 of a spray head is provided for discharging a molten liquid of the thermoplastic elastomer, and air holes 110-1, 110-2, ..., 110-6 (typically 3 to 8 holes) are provided around spray port 108. Air holes 110-1, 110-2, ..., 110-6 are provided with slight inclination such that the air therefrom intersects elastomer 109 discharged from spray port 108 in a range from several to several tens of centimeters from spray port 108. This causes elastomer 109 to be rotated in spiral form.

Screen mesh 112 is disposed below the spray head for carrying the nonwoven fabric having the filaments aligned and stretched longitudinally.

On the outside of air holes 110-1, 110-2, ... 110-6, other two air holes 111, 111' are provided in parallel with the moving direction of screen mesh 112 such that they spray air in directions opposite to each other. The air sprayed from air hole 111 collides with the air sprayed from air hole 111' and then extends in a direction perpendicular to the carrying direction of the nonwoven fabric. With the jet of the air, rotating elastomer 109 is directed perpendicularly to the carrying direction of the nonwoven fabric and attached to the nonwoven fabric. As a result, a composite sheet is obtained in which the strands of elastomer 109 are bonded onto the nonwoven fabric in a pattern with its components mainly aligned in the width direction of the nonwoven fabric.

Since one spray port 108 typically sprays the elastomer in a width ranging from 100 to 300 millimeter, a plurality of spray port 108 may be provided in accordance with the width of the composite sheet. When it is desired to provide the elastomer at a higher density without reducing the carrying speed of the nonwoven fabric, spray heads may be disposed in multi-stage in the carrying direction of the nonwoven fabric.

The forming of the nonwoven fabric by means of spinning of the filaments, and the stretching of the nonwoven fabric formed therefrom may be performed in a manner similar to that of the first embodiment using apparatuses similar to those described in the first embodiment.

(Third Embodiment)

In a third embodiment, description will be made for a case where filaments of a nonwoven fabric and strands of an elastomer are aligned in opposite directions to those in the aforementioned first and second embodiments.

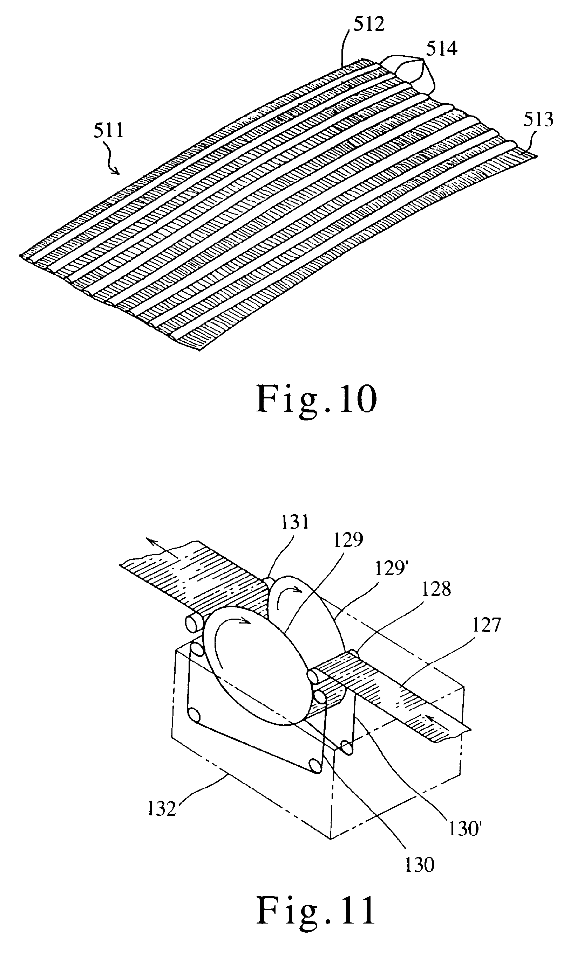

A composite sheet according to the embodiment, as shown in Fig. 10, is composite sheet 511 in which nonwoven fabric 512 has filaments 513 stretched and aligned transversely on which elastomer 514 aligned in strand shape in a direction substantially perpendicular to the aligned direction of filaments 513 is bonded. Composite sheet 511 shown in Fig. 10 has a characteristics such that it is hardly elastic transversely but is elastic longitudinally.

The manufacture of the composite sheet of the embodiment also includes spinning steps of manufacturing the nonwoven fabric having the filaments aligned in substantially one direction, stretching steps of transversely stretching the nonwoven fabric manufactured by a spinning apparatus, and a bonding step of bonding thermoplastic elastomer to the nonwoven fabric stretched transversely by a stretching apparatus. The spinning steps and the bonding step of the respective steps can employ the apparatuses used in the first or second embodiment.

Specifically, since the nonwoven fabric is formed from the filaments aligned transversely, it can be manufactured by utilizing the bonding apparatus (see Figs. 9a to 9c) used in the second embodiment to discharge, instead of the elastomer, a polymer which is to constitute the filaments from spray port 108 of the spray head. This causes the filaments to be accumulated with its components mainly aligned transversely over screen mesh 112 disposed below spray port 108, thereby making it possible to obtain the nonwoven fabric having an alignment primarily in the transverse direction.

Similarly to the second embodiment, the number of spray ports may be increased or reduced in accordance with the width of the nonwoven fabric to be manufactured, or a plurality of spray heads may be disposed in accordance with the density of the filaments.

When the nonwoven fabric is manufactured using the apparatus shown in Figs. 9a to 9c, it is preferable to set the temperature of air sprayed from respective air holes to be higher than the melting point of the filaments by several tens of degrees or more in order to reduce variations in density of the filaments in the longitudinal direction and to suppress molecular orientation of the filaments as much as possible. Also, some types of polymers constituting the filaments may require heating of air sprayed from only one of two types of the air holes.

On the other hand, the elastomer is aligned longitudinally, and the spinning apparatus (see Fig. 2) used in the first and second embodiments may be utilized. Specifically, while the transversely stretched nonwoven fabric is carried by conveyor 7, the thermoplastic elastomer is pushed out from nozzle 3 of melt blow die 1 to bond the elastomer to the nonwoven fabric.

In this case, since the elastomer need be solidified after contact with the nonwoven fabric on conveyor 7, spray nozzles 8a, 8b shown in Fig. 2 are not required. Also, proximity stretching is not required and thus the stretching unit such as stretching cylinder 11 is eliminated. It should be noted that in the case of bonding the elastomer to the nonwoven fabric using the apparatus shown in Fig. 2, since the density of the elastomer may be lower than the density of the filaments in manufacturing the nonwoven fabric, a pitch in arranged nozzles 3 is set as appropriate in accordance with the density of the elastomer.

The bonding of the elastomer may employ the apparatus in the spun-bonding scheme shown in Fig. 6. Additionally, the elastomer may be aligned longitudinally by means of a number of spray heads as shown in Figs. 9a to 9c which are arranged transversely and rotated by 90 degrees to spread the elastomer longitudinally (parallel with the traveling direction of a nonwoven fabric) with the help of air from air holes 111, 111'.

In this manner, the strands of the elastomer are formed longitudinally in the process of carrying the nonwoven fabric and the elastomer is directly bonded to the nonwoven fabric in this embodiment. More specifically, in the embodiment, in the process of forming the strands of the elastomer, the elastomer before solidification reaches the nonwoven fabric, and the elastomer reaching the nonwoven fabric is solidified and bonded at the same time on the nonwoven fabric. This enables convenient and efficient manufacture of the composite sheet having elasticity in the longitudinal direction. Since the elastomer is aligned in strand shape longitudinally, even a small amount of elastomer can exert its elasticity in the longitudinal direction. Additionally, the amount of the nonwoven fabric can be reduced similarly to the first embodiment.

As described above, the spinning of filaments and the bonding of the elastomer can be performed utilizing the apparatuses used in the aforementioned respective embodiments, although the stretching of the nonwoven fabric can not be performed utilizing the stretching apparatus used in the first and second embodiments since the aligned direction of the filaments is different from that in the aforementioned embodiments.

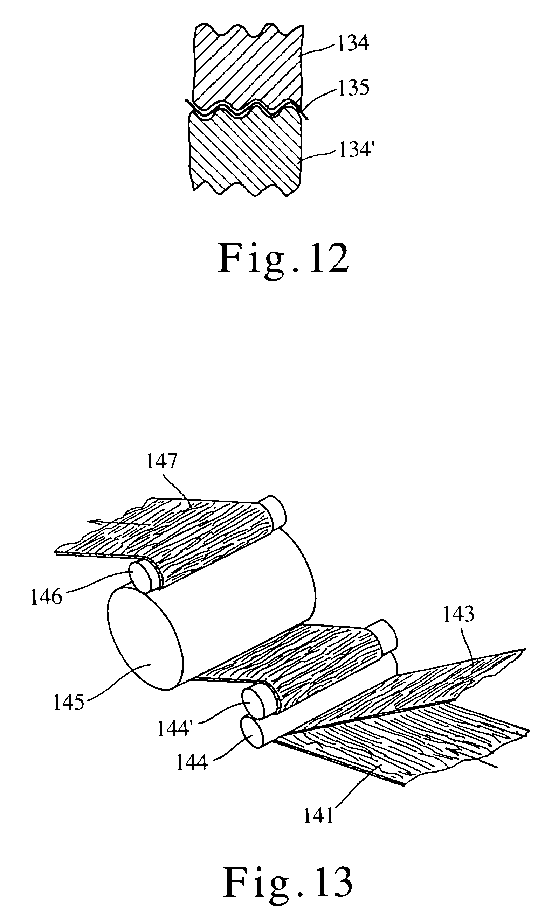

For this reason, in the present embodiment, the stretching of the nonwoven fabric in the width direction is performed using, for example, a transverse stretching apparatus of pulley type as shown in Fig. 11 or a transverse stretching apparatus of groove roll type as shown in Fig. 12. Description will be hereinafter made for the stretching apparatus used for transverse stretching of the nonwoven fabric in the embodiment.

Referring to Fig. 11, the transverse stretching apparatus of pulley type will be first described. Nonwoven fabric 127 comprising filaments with no orientation is introduced to two stretching pulleys 129, 129' through turn roll 128. Two pulleys 129, 129' are arranged to have a track widening gradually toward downstream from upstream in the moving direction of nonwoven fabric 127, in which nonwoven fabric 127 is introduced to the narrowest portion in the track. Endless belts (or ropes) 130, 130' are strained to follow the track of pulleys 129, 129'. Nonwoven fabric 127 guided by pulleys 129, 129' are fed with its both edges in the width direction being pinched by pulleys 129, 129' and endless belts 130, 130', and stretched transversely according to the track created by pulleys 129, 129'. Nonwoven fabric 127 stretched transversely comes away from belts 130, 130' at the widest portion in the track of pulleys 129, 129', and is taken over via turn roll 131. The gradually widening stretching portion is covered with chamber 132 and heated with hot wind, hot water, infrared rays, or the like. In the case of hot wind heating, a favorable thermal efficiency results from heating in which the hot wind passes through nonwoven fabric 127.

Next, description will be made for the transverse stretching apparatus of groove roll type with reference to Fig. 12. In an example shown in Fig 12, groove rolls 134, 134' each provided with alternate peaks and valleys are disposed such that the peaks of one groove roll 134 match the valleys of the other groove roll 134'. Nonwoven fabric 135 comprising filaments with no orientation is inserted between the peaks and valley and stretched transversely by means of the projections and depressions formed from the peaks and valleys. Nonwoven fabric 135 after stretching is then subjected to tentering, and stretching factor may be increased by repeating the steps on a plurality of times.

This scheme tends to deteriorate the stretching efficiency at both edges in the width direction of nonwoven fabric 135. Countermeasures against that include holding of both edge portions of nonwoven fabric 135 with rolls at both end portions of groove rolls 134, 134' which are formed from low elastic material such as a foaming material or ultra-soft rubber and which have substantially the same height as that of the peaks of groove rolls 134, 134'. This allows a more favorable stretching efficiency at both edge portions. As another method, both edge portions of nonwoven fabric 135 are pulled outward in the width direction by a thread or thin tape (for example, a stretching tape of polyolefin) or the like to perform stretching. Alternatively, groove rolls 134, 134' are provided at both end portions with grooves for routing belts or ropes which hold both edge portions of nonwoven fabric 135 to perform transverse.

While the first to third embodiments show an example in which the strands of the elastomer are aligned with space between them substantially in one direction as described above, the strands of the elastomer may be aligned such that some of them intersect or overlap, or the strands of the elastomer may be aligned with no space between them to provide a web. In this case, the formation of the elastomer and the bonding to the nonwoven fabric may be performed in separate steps.

For example, an elastomer web having orientation in the transverse direction can be manufactured using the apparatus shown in Figs. 9a to 9c. When the formation of the elastomer web and the bonding to the nonwoven fabric are performed in separate steps, the elastomer web having orientation in the transverse direction is heated at a temperature equal to or higher than the softening point of the elastomer at the same time it is enlarged transversely to provide an arrangement in the transverse direction. Then, while a nonwoven fabric having filaments aligned longitudinally is carried, the elastomer web is placed on the nonwoven fabric, and then the nonwoven fabric and the elastomer web are bonded under heating using a calender roll method or an embossing roll method, thereby obtaining a composite sheet.

Fig. 13 shows an example of an apparatus for bonding the elastomer web to the nonwoven fabric. In the apparatus shown in Fig. 13, nonwoven fabric 141 having filaments aligned longitudinally and elastomer web 143 having the transverse alignment are passed through pinch rolls 144, 144' one upon the other, supplied to heating cylinder 145, and subjected to heat pressing between heating cylinder 145 and heat pressing roll 146 to provide composite sheet 147.

The use of heat is most efficient and inexpensive for bonding fabric 141 to elastomer web 143. However, for some kinds of elastomers, both of them may be bonded by interposing an adhesive third layer such as generally used EVA between nonwoven fabric 141 and elastomer web 143. In this case, one of pinch rolls 144, 144' is provided with an adhesive bath which supplies an adhesive, thereby making it possible to bond nonwoven fabric 141 to elastomer web 143.

While the example shown in Fig. 13 provides description assuming that the filaments of nonwoven fabric 141 are aligned longitudinally and elastomer web 143 is arranged transversely, the arrangement directions may be reversed.

(Fourth Embodiment)

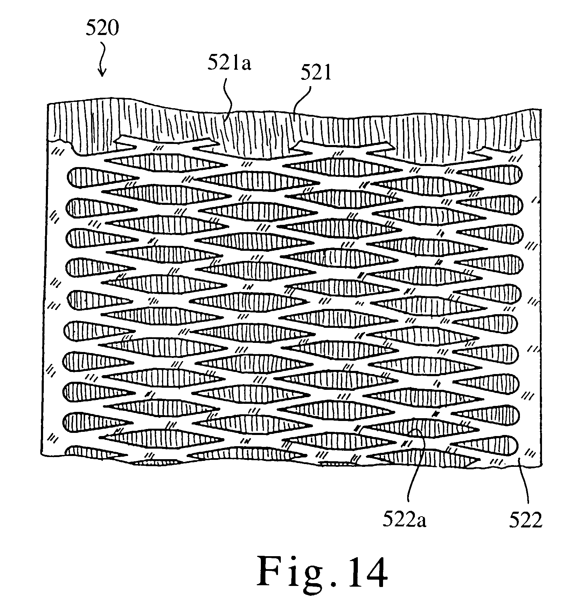

Referring to Fig. 14, there is shown composite sheet 520 according to a fourth embodiment of the present invention in which net-like film 522 made from thermoplastic elastomer is bonded as a elastic web to one surface of nonwoven fabric 521. Nonwoven fabric 521 is formed from nonelastic fibers 521a aligned and stretched substantially longitudinally. Net-like film 522 is provided with a number of openings 522a long in the transverse direction in meshed shape, as air holes.

Since nonwoven fabric 521 used for composite sheet 520 has fibers 521a aligned and stretched longitudinally, it is deformed slightly in the longitudinal direction but it can be deformed significantly in the transverse direction substantially perpendicular to the aligned direction of fibers 521a. In other words, it has the characteristic similar to that of the nonwoven fabric used in the first embodiment.

Such nonwoven fabric 521 is bonded to net-like film 521 made from thermoplastic elastomer, thereby obtaining composite sheet 520 which is elastic transversely but is hardly elastic longitudinally with favorable dimensional stability.

Since net-like film 522 is provided with a number of openings 522a, air permeability and moisture permeability are achieved even when the elastomer is used for providing elasticity for composite sheet 520. Additionally, the shape of openings 522a long in the transverse direction enhances the utilization efficiency of the elastomer in the elasticity direction or transverse direction, which enables efficient elasticity with a small amount of the elastomer.

The thermoplastic elastomer similar to that used in the first embodiment can be used.

As fibers 521a, long fiber filaments or short fibers may be used as long as a nonwoven fabric formed therefrom has a structure with air permeability and moisture permeability. There is few fibers to fall out from the nonwoven fabric made of long fiber filaments even after elasticity repeated several hundreds of times and is suited for so-called lint-free use. Nonwoven fabrics made from long fiber filaments include a nonwoven fabric obtained by stretching a spun-bonded nonwoven fabric or a melt blown nonwoven fabric, a nonwoven fabric obtained by opening fibers of a tow, or the like. On the other hand, a nonwoven fabric made from short fibers has good texture like cotton and is suitable for use in which the fabric is in direct contact with skin. Nonwoven fabrics made from short fibers include carded webs or the like.

While polymers similar to those suitable for the filaments in the first embodiment may be used as polymers suited for fiber 521a, fibers made from polymers with rubber elasticity such as polyurethane are eliminated.

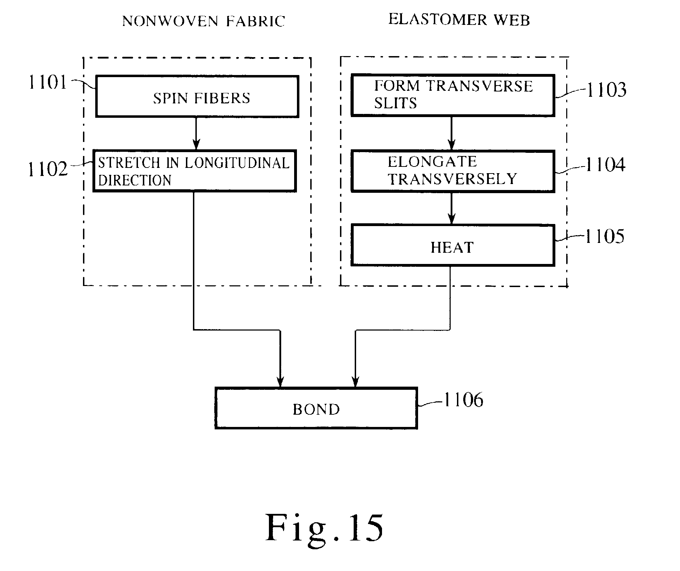

Next, an example of a method of manufacturing composite sheet 520 will be described with reference to a flow chart in Fig. 15.

The steps of manufacturing composite sheet 520 are broadly classified into steps of manufacturing nonwoven fabric 521, steps of manufacturing an elastomer web (elastic web), and a step of bonding them.

In the steps of manufacturing nonwoven fabric 521, first, an appropriate spinning apparatus is used to obtain a web having fibers 521a aligned substantially longitudinally (step 1101). Next, the web is stretched in the aligned direction of fibers 521a, thereby obtaining a longitudinally stretched nonwoven fabric (step 1102).

On the other hand, in the steps of manufacturing the elastomer web, first, slits in the transverse direction are formed in a film made from elastomer (step 1103). Next, the film having the slits formed therein is elongated or enlarged transversely (step 1104). With this step, the film is shrunk longitudinally and the portions having the slits are expanded transversely to form openings 522a as shown in Fig. 14. Since the slits are formed transversely, openings 522a are longer in the transverse direction. The slits in a staggered arrangement result in an opening pattern as shown in Fig. 14.

Next, the film enlarged transversely is heated (heat treatment) as it is at a temperature equal to or higher than a temperature at which the material forming the film begins flowing (step 1105). By holding this state, the contractile force of the film is lost, and the film maintains the shape shown in Fig. 14 even when the tension applied to the film is removed, thus forming net-like film 522. In other words, the heating at this step is performed with tension being applied to the film until the tension is lost. The heating temperature is preferably higher than the aforementioned flow beginning temperature by 10 to 20 degrees, more preferably by 30 to 50 degrees to reduce the time for the heating.

The flow beginning temperature is a glass transition temperature when the hard segment of the elastomer is a non-crystalline polymer, at which temperature or higher the elastomer begins flowing. When the hard segment is a crystalline polymer, its flow beginning temperature is the melting temperature of the crystal, at which temperature or higher the elastomer begins flowing. The glass transition temperature and melting temperature of the thermoplastic polymer are measured with a DSC apparatus in accordance with JISK 7121. The glass transition temperature and melting temperature in thermoplastic elastomer form are generally lower than those in a polymer alone of the hard segment.

As the heat treatment, constant length heat treatment which permits no shrinkage is generally performed, but heat treatment involving slight shrinkage, i.e. shrinkage heat treatment is also applicable. The shrinkage preferably ranges from 20 to 30%, typically in the neighborhood of 10%. Particularly, when the time or temperature for heat treatment can not be sufficiently ensured, heat treatment involving slight shrinkage is effective in eliminating the contractile force.

Since the width (length in the transverse direction) of a finished film is derived after the transverse enlargement of the film at its initial stage, the width of the film at the initial stage is determined in consideration of the width of the finished film and the enlargement factor of the film.

While the enlargement in the transverse direction and the heating (heat treatment) of the film are herein separately performed, they may be simultaneously performed. However, the enlarging step and heating step are preferably separated since the film formed from the elastomer which is a rubber elastic material is uniformly elongated by enlargement under heating at room temperature or low temperature.

Nonwoven fabric 521 and net-like film 522 obtained as described above are bonded with their positions in the width direction being matched (step 1106). Since net-like film 522 is made from thermoplastic elastomer, simple heating of net-like film 522 causes net-like film 522 to be easily adhered to nonwoven fabric 521. Therefore, nonwoven fabric 521 and net-like film 522 can be simply bonded at low cost without using an adhesive or the like.

In the bonding step, a film before elongation may be supplied on nonwoven fabric 521, overlaid on nonwoven fabric 521 and heated in a state where the film is elongated to simultaneously eliminate the contractile force of the film and to bond the film to nonwoven fabric 521.

In the following, the aforementioned respective steps will be described in detail.

(4-a) Nonwoven Fabric Manufacturing Steps

Nonwoven fabric 521 can be manufactured typically by spinning a web using the melt blow method or spun-bonding method which is a typical spinning method for nonwoven fabrics and then stretching the web longitudinally. Since the spinning and stretching can be performed similarly to those in the first embodiment using a spinning apparatus and a longitudinal stretching apparatus similar to those shown in the first embodiment, detailed description thereof is omitted.

(4-b) Net-Like Film Manufacturing Steps

Net-like film 522, beginning with an original film made from thermoplastic elastomer, is manufactured by forming slits in the original film, elongating it transversely, and heating it to eliminate the contractile force, as described above. As an original film, general film are used, for example, those formed with a T die method, those formed by cutting and opening a tubular film, or the like.

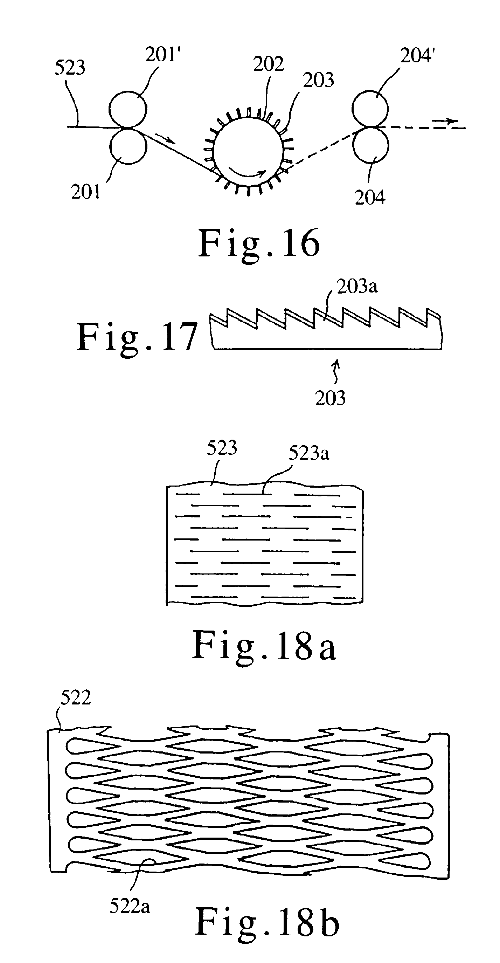

First, the slits in the original film can be formed using, for example, an apparatus shown in Fig. 16. In Fig. 16, film 523 serving as an original film is guided on rotation roller 202 after passing between nip rollers 201, 201' at room temperature or after preheating. Rotation roller 202 has cutters 203 fixed radially on the peripheral surface as shown in Fig. 17, for example. Each of cutters 203 includes triangular edges 203a arranged in a line and having cutting edges on their oblique sides. In adjacent cutters 203, triangular edges 203a are arranged such that the positions of triangular edges 203a of the respective cutters 203 are shifted by a half pitch in arranged triangular edges 203a.

The surface speed of rotation roller 202 is higher than the supply speed of film 523 by nip rollers 201, 201' and cutter 203 cuts film 523 under tension. This allows slits 523a in the transverse direction to be formed in film 523 in a staggered pattern as shown in Fig. 18a. Film 523 having slits 523a formed therein after passing through rotation roller 202 is received by nip rollers 204, 204' and fed to the next step. It should be noted that the receiving speed of film 523 by nip rollers 204, 204' is higher than the peripheral peed of the cutting edges of cutter 203. This facilitates taking the cutting edges of cutter 203 out of film 523.

After slits 523a are formed in film 523 as described above, film 523 is enlarged transversely.

The transverse enlargement of film 523 is performed using, for example, the transverse stretching apparatus of pulley type as shown in Fig. 11, and the width of the film is increased as follows.

First, film 523 shown in Fig. 18a is supplied to the apparatus. The atmosphere in chamber 132 is heated at a temperature equal to or higher than the flow beginning temperature of the material of film 523, and the contractile force of film 523 is lost before film 523 comes away from belts 130, 130'. As a result, film 523 maintains an extended width even after it passes through turn roll 131 and is taken over, providing net-like film 522 having openings 522a formed in a mesh pattern as shown in Fig. 18b.

While description has been made for an example in which the slits are formed in the original film using the cutter, the formation of the slits is not limited thereto. The slits may be formed by irradiating a film with laser beam, infrared rays, or ultraviolet rays as disclosed in Japanese Patent Laid-open No.228669/93.

(4-c) Bonding Step

For bonding the longitudinally stretched non-woven fabric to the net-like film, a calender roll method, an embossing roll method or the like may be used. Preferably, the longitudinally stretched nonwoven fabric and net-like film 522 can be bonded by using the apparatus shown in Fig. 13 to supply net-like film 522 instead of web 143 of the elastomer.

In the bonding of nonwoven fabric 521 to net-like film 522, ultrasound bonding, high frequency bonding, physical bonding methods such as needle punch, water jet or the like may be used in addition to the aforementioned methods.

As described above, the elastomer web and the nonwoven fabric made from nonelastic fibers are bonded in a state where the contractile force of the web is eliminated with the elongation and heating of the thermoplastic elastomer web. Such elongation of the elastomer web extends the openings in the elastomer web to obtain the composite sheet having sufficient air permeability and moisture permeability. The elongation factor of the elastomer web is typically two, and preferably three or more.

Additionally, the elongation of the elastomer web reduces the thickness of the elastomer web and thins the strands constituting the net to provide increased flexibility, thereby obtaining the elastic composite sheet which is particularly preferable for use in clothes or the like. The elongation means that the original elastomer web may be thick corresponding to the elongation factor. While it is difficult to manufacture a thin web at uniform thickness using the thermoplastic elastomer, the elongation of the web reduces the thickness thereof and thus the manufacture of the original elastomer web is facilitated.

In the present embodiment, the elastomer web is elongated transversely, which enables the manufacture of a product of large width from an original web of small width. Therefore, the transverse elongation of the elastomer web reduces cost for equipment and is preferable for manufacturing a large-width web using the thermoplastic elastomer of unfavorable formability.

While the present embodiment illustrates composite sheet 520 in which nonwoven fabric 521 is bonded to net-like film 522, net-like film 522 forming composite sheet 520 can be used by itself as a elastic web. When net-like film 522 is used as a elastic web, net-like film 522 is a film having elasticity primarily in the transverse direction. The elastic range as a rubber elastic material in the longitudinal direction is smaller than that in the transverse direction even when the stress is applied thereto, in which the elasticity is small only with openings 522a being widened.

Since net-like film 522 is formed by transversely elongating film 523 as described above, a elastic web of large width can be obtained. In other words, a product of large width can be formed from an original web of small width so that the cost for equipment is lower and it is preferable for processing of the thermoplastic elastomer of unfavorable formability. Additionally, since the film is elongated to obtain the elastic web, the resulting elastic web is thinner and flexible in proportion to the elongation factor. As a result, it has good texture and can be preferably utilized for use in clothes or the like.

The elongation direction of the film is determined by the elongation direction intended by the elastic web, that is, the transverse direction in the embodiment. A elastic web intending to expand and contract in the longitudinal direction as later described is elongated longitudinally, while a elastic web intending expand and contract both in longitudinal and transverse directions is elongated both longitudinally and transversely.

The elongation of the film means that an original film may be thick according to the elongation factor. While it is difficult to manufacture a thin original web at uniform thickness using the thermoplastic elastomer, such a thick original web permitted facilitates the manufacture of the original web. The elongation factor is preferably two or more, more preferably three or more.

Since the thermoplastic elastomer is susceptible to plastic deformation in a heated state, heat pressing in a heated state after heat treatment can flatten the web. Therefore, the web thinned by the elongation can be further thinned by this heat pressing. The heat pressing allows the thickness of the web to be reduced to two-third, preferably one-half or lower. The web becomes more flexible with soft touch and pliable feeling from the flattening with the heat pressing. The heat pressing is also effective in removing the contractile force from the elongation.

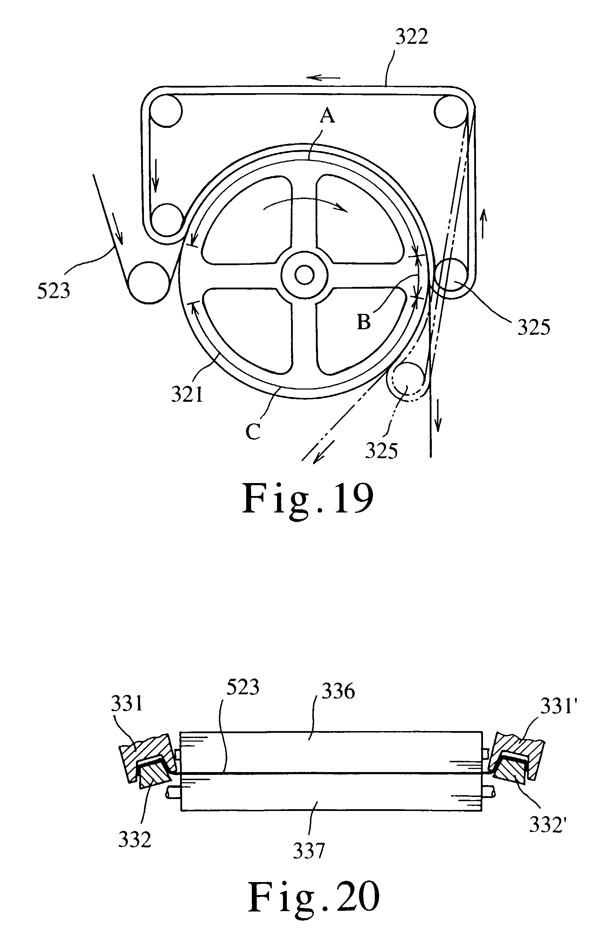

While the embodiment illustrates the film elongated transversely and the apparatus shown in Fig. 11 as an example of an apparatus used therefor, other examples of apparatuses for transversely elongating the film will be hereinafter described with reference to Fig. 19 and Fig. 20.

An apparatus shown in Fig. 19 includes turn pulley 325 movable, for example by replacing a belt or adjusting the position of a pulley (not shown) for adjusting tension so as to allow adjustment of a position where belt 322 or film 523 comes away from elongation pulley 321. In an elongation apparatus of pulley type, the disposal of elongation pulley 321 as shown also in Fig. 11 defines elongating portion A where the interval between elongation pulleys 321 is gradually increased, parallel portion B where the interval between elongation pulleys 321 is substantially constant, and narrowing portion C where the interval between elongation pulleys 321 is tapered. In the elongation apparatus shown in Fig. 19, turn pulley 325 is provided movably between parallel portion B and tapered portion C. Therefore, turn pulley 325 located at parallel portion B causes film 523 to be elongated similarly to that described in Fig. 11, while turn pulley 325 located at narrowing portion C as shown two-dot chain lines causes film 523 to be slightly narrowed and taken over after elongation up to its maximum width.

An elongation apparatus shown in Fig. 20 has metal roll 336 and rubber roll 337 for nipping film 523 disposed near a position where belts 332, 332' or film 523 comes away from elongation pulleys 331, 331'. Such disposal of metal roll 336 and rubber roll 337 allows film 523 with no restoring power due to heating to be pressed in a heated state, thereby obtaining a thinner elastic web.

While the apparatuses shown in Figs. 11, 19 and 20 are elongation apparatuses of pulley type, the transverse elongation of the web is not limited to the pulley type, and transverse elongation apparatuses such as a tentering scheme can be used.

While description has been made for typical examples of the transversely elastic web which constitutes the composite sheet having great elasticity in the transverse direction or which has elasticity by itself in the transverse direction, along with the method for manufacturing the same, the shape of the air holes (openings) in the transversely elastic web is not limited to that shown in Fig. 14.

When the transversely elastic web is used in the composite sheet, it is preferable that the used amount of the elastomer in a direction perpendicular to the elastic direction of the composite sheet is smaller than that in the elastic direction from the viewpoint of the utilization efficiency of the elastomer. Several preferable patterns of openings will be hereinafter illustrated.

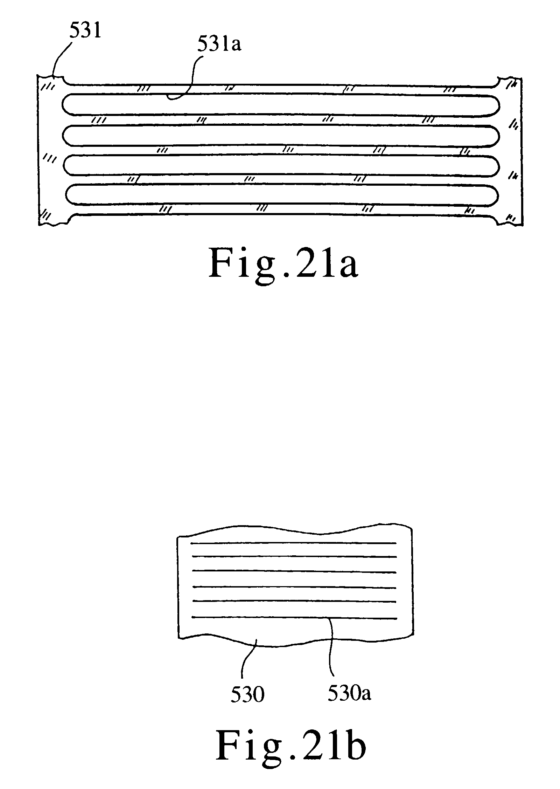

Shown in Fig. 21a is an example of ladder-like film 531 having an opening pattern in ladder shape. Openings 531a have lengths which range substantially across the transverse direction of ladder-like film 531 in which openings 531a are arranged longitudinally in ladder-like film 531. Such ladder-like film 531 may be manufactured, as shown in Fig. 21b, by forming slits 530a ranging substantially across the width direction of film 530 serving as an original film at intervals in the longitudinal direction, elongating film 530 transversely, and heating film 530 at a temperature equal to or higher than the flow beginning temperature of the thermoplastic elastomer to remove the contractile force.

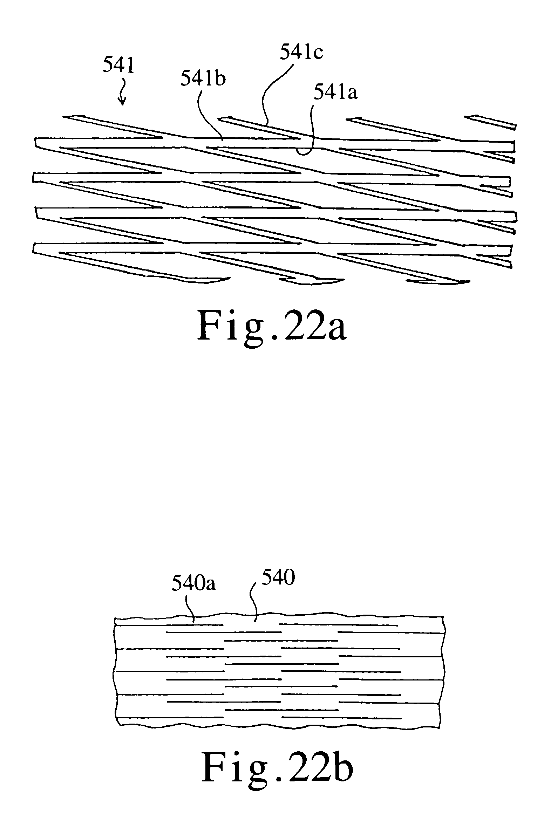

Shown in Fig. 22a is an example of branch-like film 541 having an opening pattern in which trunk portions 541b and branch portions 541c with different thickness intersect. Branch-like film 541 comprises trunk portions 541b substantially parallel with the transverse direction and branch portions 541c which are thinner than trunk portions 541b and obliquely intersect trunk portions 541b. These trunk portions 541b and branch portions 541 surround and form openings 541a. Such branch-like film 541 may be manufactured, as shown in Fig. 22b, by forming slits 540a arranged in stair shape in the transverse direction in film 540 serving as an original film, transversely elongating film 540, and heating film 540 at a temperature equal to or higher than the flow beginning temperature of the thermoplastic elastomer to remove the contractile force.

(Fifth Embodiment)

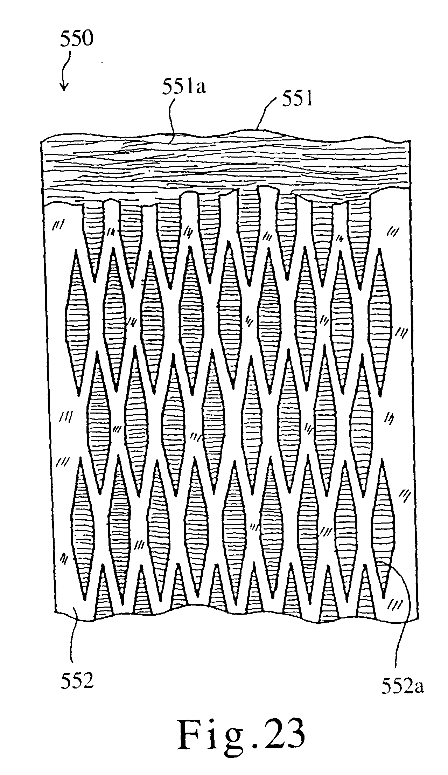

Referring to Fig. 23, there is shown composite sheet 550 in which net-like film 552 made from thermoplastic elastomer provided with a number of openings 552a long in the longitudinal direction is bonded as a elastic web to one surface of nonwoven fabric 551 including fibers 551a aligned and stretched substantially transversely.

Composite sheet 550 of a fifth embodiment has nonwoven fabric 551 and net-like film 552 opposite to those in the fourth embodiment in terms of longitudinal and transverse directions. Therefore, its characteristics are also opposite to those of the composite sheet described in the fourth embodiment in terms of longitudinal and transverse directions. Specifically, composite sheet 550 of the embodiment is elastic longitudinally but is hardly expanded in the transverse direction with favorable dimensional stability. Other characteristics such as air permeability (moisture permeability), high utilization efficiency of the elastomer and the like are similar to those in the fourth embodiment. The same materials constituting nonwoven fabric 551 and elastomers as those in the fourth embodiment can be used.

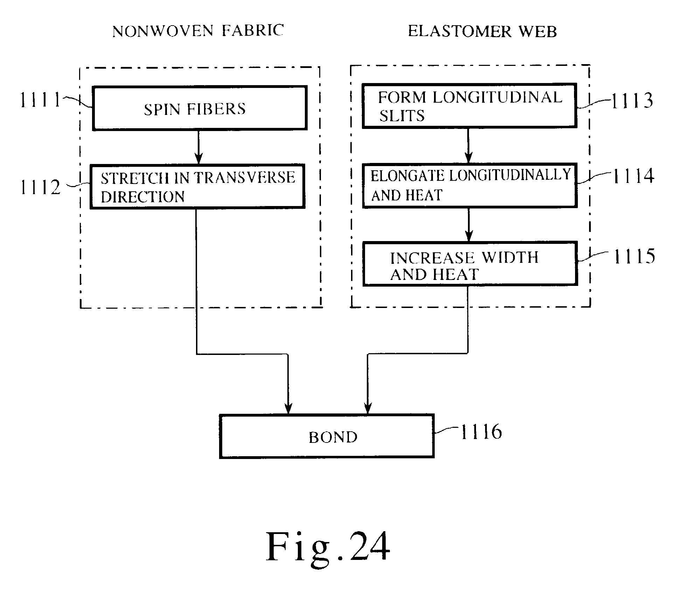

Next, an example of a method of manufacturing composite sheet 550 in the embodiment will be described with reference to a flow chart in Fig. 24.

In the embodiment, similarly to the fourth embodiment, steps of manufacturing composite sheet 550 are broadly classified into steps of manufacturing nonwoven fabric 551, steps of manufacturing the elastomer web, and a step of bonding them.

In the steps of manufacturing nonwoven fabric 551, first, an appropriate spinning apparatus is used to obtain a web having fibers aligned substantially transversely (step 1111). Next, the web is stretched in the aligned direction of the fibers (step 1112) to obtain transversely stretched nonwoven fabric 551.

On the other hand, in the steps of manufacturing the elastomer web, first, slits long in the longitudinal direction are formed in a film made from elastomer (step 1113). Next, the film having the slits formed therein is elongated longitudinally and heated at a temperature equal to or higher than the flow beginning temperature for the material of the film (step 1114). This removes the contractile force of the film. Next, the width of the film having the slits formed therein is increased (step 1115). At this point, the film is heated at a temperature equal to or higher than the flow beginning temperature of the material. This removes the contractile force of the film, thereby obtaining net-like film 552 provided with openings 552a long in the longitudinal direction as shown in Fig. 23.

Nonwoven fabric 551 and net-like film 552 thus obtained are bonded with their positions in the width direction being matched (step 1116) to provide composite sheet 550.

In the following, the aforementioned respective steps will be described in detail.

(5-a) Nonwoven Fabric Manufacturing Steps

Methods of manufacturing the nonwoven fabric include those, for example, disclosed in Japanese Patent Publication No.36948/91, Japanese Patent Laid-open No.6126/95, Japanese Patent No.2612203, Domestic Republication of PCT International Publication for Patent Application W09617121, Japanese Patent Laid-open No.204764/98, Japanese Patent Laid-open No.222759/99, or the like.

Since the embodiment employs the nonwoven fabric having the fibers aligned and stretched substantially transversely, an apparatus different from that in the fourth embodiment is used for manufacturing the nonwoven fabric. An example thereof is the apparatus shown in Figs. 9a to 9c. With the apparatus, a molten liquid of a polymer which is to constitute a nonwoven fabric is discharged from spray port 108 to accumulate fibers on screen mesh 112 with its components mainly arranged transversely, thereby obtaining the nonwoven fabric with an alignment primarily in the transverse direction.

The nonwoven fabric obtained is stretched transversely to provide the transversely stretched nonwoven fabric. The apparatus shown in Fig. 11 is utilized as it is for the transverse stretching of the nonwoven fabric.

(5-b) Net-Like Film Manufacturing Steps

Net-like film 522 used in the embodiment, beginning with a film made from thermoplastic elastomer, is manufactured by forming flits in the film, elongating it longitudinally, and increasing its width, as described above.

First, the slits in the longitudinal direction are formed in the film. The formation of the slits can be performed by passing the film over a rotation roller provided with cutters on its peripheral surface, similarly to the fourth embodiment. Since the slits long in the longitudinal direction are formed in the embodiment, the cutters are attached in a direction perpendicular to that of the cutters used in the second embodiment. This result in film 553 having slits 553 in the longitudinal direction in a staggered pattern.

Next, the film is enlarged longitudinally, which may be performed using apparatus similar to that used in the longitudinal stretching of the nonwoven fabric in the fourth embodiment or general longitudinal stretching apparatuses. In this case, the enlargement of the film in the longitudinal direction reduces the width of the film in accordance with the enlargement factor to cause the slits to be opened correspondingly, thus providing a net-like film. At this point, the film is heated at a temperature equal to or higher than the flow beginning temperature to remove the contractile force.

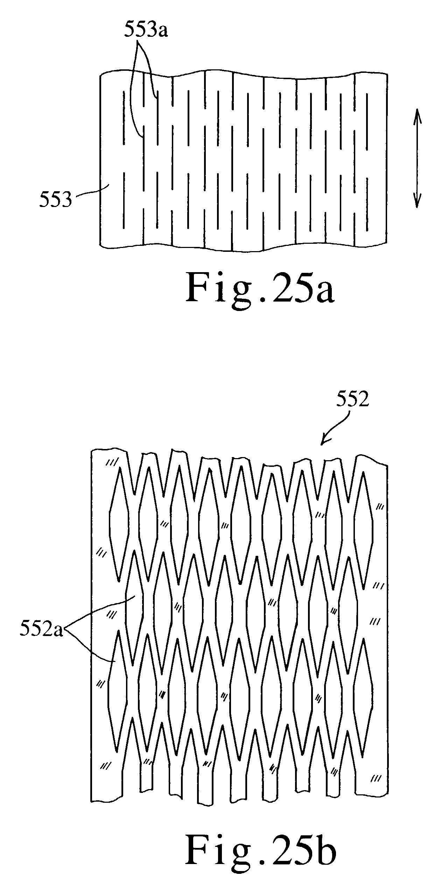

Next, the width of the film having the slits formed therein is increased. At this step, the same apparatus as that used for increasing the width of the film in the fourth embodiment, i.e. the apparatus shown in Fig. 11 can be used to increase the width of the film. At this point, the film is heated at a temperature equal to or higher than the flow beginning temperature to remove the contractile force, thereby obtaining net-like film 552 having openings 552a long in the longitudinal direction as shown in Fig. 25b. It should be noted that the width-increasing factor at this point is smaller than the factor of the enlargement in the longitudinal direction. In other words, the film is elongated relatively in the longitudinal direction.

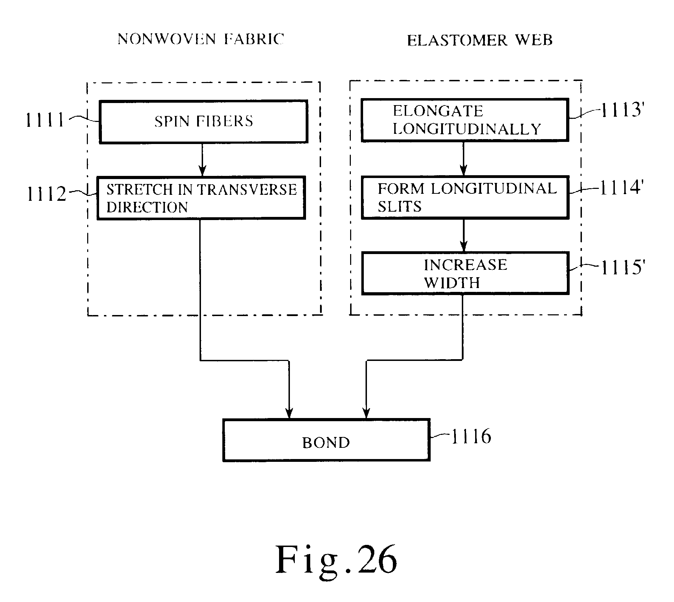

While description has been made for an example in which the slits long in the longitudinal direction are formed in the film, and the film is enlarged longitudinally and then the width thereof is increased, the net-like film may be formed by enlarging the film first longitudinally (step 1113'), forming the longitudinal slits (step 1114'), and then transversely increasing the width of the film having the slits formed therein (step 1115') as shown in Fig. 26.

While the elongation and heat treatment of the film may be performed simultaneously, it is preferable to separate the elongation step from the heat treatment step and to perform the elongation of the film at a temperature lower than the flow beginning temperature of the thermoplastic elastomer in consideration of the uniform elongation of the film, similarly to the fourth embodiment. Additionally, the film after heat treatment may be subjected to heat pressing in a heated state in order to obtain a thinner film (web).

A roll stretching method used for general stretching of films or nonwoven fabrics can be used for the longitudinal elongation of the film. In the roll stretching, proximity stretching means having an extremely short stretching distance for the web width is most preferable for the longitudinal elongation in the present invention because the elongation causes no reduction in width of the web to allow the manufacture of a large-width web and uniform elongation is provided and because it can manufacture a thinner web at the same elongation factor as compared with other stretching methods. Also, the proximity stretching means is compact in size. Proximity stretching means disclosed in Japanese Patent Publication No.36948/91 or Japanese Patent Laid-open No.204767/98 is particularly preferable, both of which are earlier inventions by the present inventors.

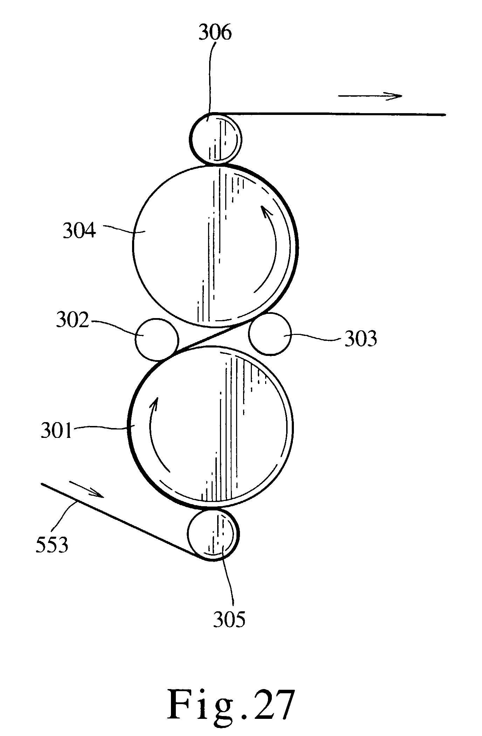

Next, description will be made for an apparatus for elongating the film longitudinally and performing heat treatment with reference to Fig. 27. In Fig. 27, film 553 having slits 553a (see Fig. 25a) formed therein is introduced to elongation cylinder 301 via turn roll 305. Elongation cylinder 301 may be heated, but usually it is used at room temperature.

Heat treatment cylinder 304 is disposed with space provided from elongation cylinder 301 on the downstream side of elongation cylinder 301 in the moving direction of film 553. Heat treatment cylinder 304 is provided for heating film 553 at a temperature equal to or higher than the flow beginning temperature, and is rotated at a peripheral surface speed higher than the peripheral surface speed of elongation cylinder 301. This causes film 553 to be elongated at a factor corresponding to the ratio of the peripheral surface speeds of both cylinders 301, 304, and in that state, the contractile force is eliminated. Nip rolls 302, 303 made from rubber are disposed respectively at a position where film 553 comes away from elongation cylinder 301 and at a position where film 553 is received by heat treatment cylinder 304, thereby stabilizing the distance between elongation points in film 553.

Film 553 with no contractile force after heat treatment by heat treatment cylinder 304 is pressed between heat treatment cylinder 304 press roll 306 and is taken over as a elastic web.

(5-c) Bonding Step

The nonwoven fabric having the fibers aligned and stretched transversely can be bonded to the net-like film having the longitudinally long openings long similarly to the fourth embodiment.

(Sixth Embodiment)

While the aforementioned fourth and fifth embodiments show the example in which the film having openings is used as an elastomer web, the present invention is not limited thereto, and a nonwoven fabric made from thermoplastic elastomer can be used.

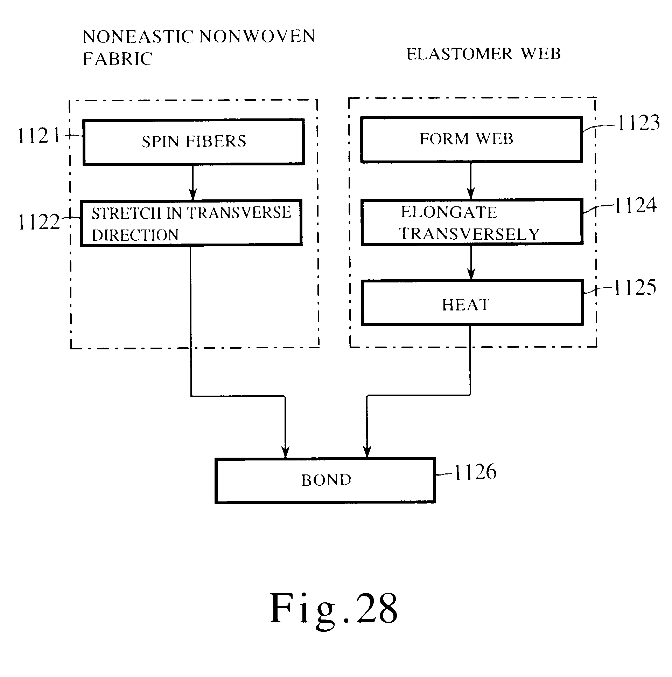

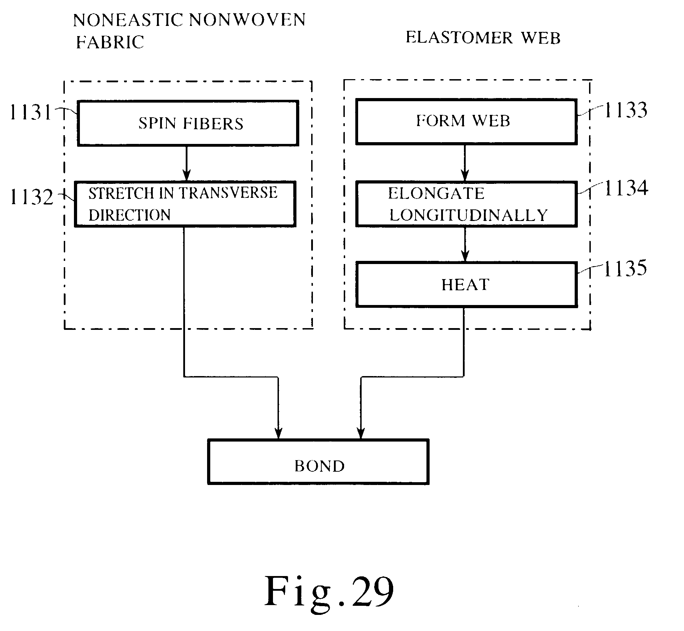

Fig. 28 and Fig. 29 show an example of steps of manufacturing a composite sheet when a thermoplastic elastomer nonwoven fabric is used as an elastomer web.

In the example shown in Fig. 28, a fiber spinning step (step 1121) and a longitudinal stretching step (step 1122) in steps of manufacturing an nonelastic nonwoven fabric are the same as those in the fourth embodiment. On the other hand, in steps of manufacturing an elastomer nonwoven fabric, a nonwoven fabric having elastomer fibers aligned transversely is first formed (step 1123), it is enlarged transversely (step 1124), and heated at a temperature equal to or higher than the flow beginning temperature of the elastomer (step 1125). Next, the nonelastic nonwoven fabric and the elastomer nonwoven fabric are bonded (step 1126) to manufacture a composite sheet.

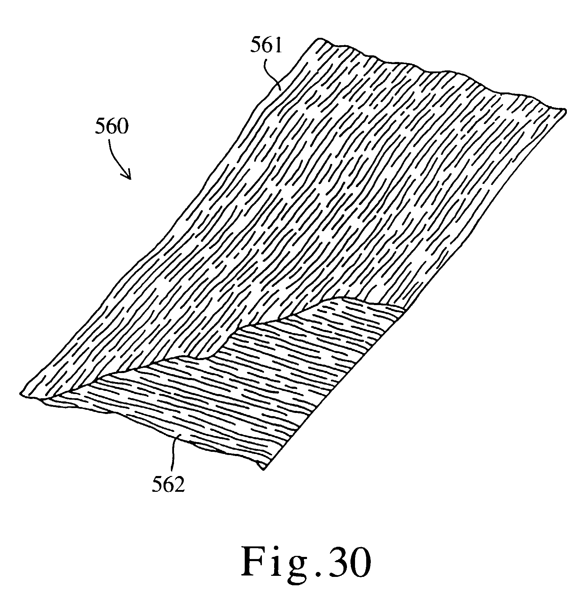

Fig. 30 shows a composite sheet obtained in this manner. Composite sheet 560 shown in Fig. 30 comprises nonelastic nonwoven fabric 561 having nonelastic fibers aligned substantially longitudinally and elastomer nonwoven fabric 562 having elastomer fibers aligned substantially transversely.

Shown in Fig. 29 is an example for manufacturing a composite sheet which has arrangements of an nonelastic nonwoven fabric and an elastomer nonwoven fabric opposite to those shown in Fig. 30. In the example shown in Fig. 29, a fiber spinning step (step 1131) and a transverse stretching step (step 1132) in steps of manufacturing the nonelastic nonwoven fabric are the same as those in the fifth embodiment. On the other hand, in steps of manufacturing the elastomer nonwoven fabric, a nonwoven fabric having elastomer fibers aligned longitudinally is first formed (step 1133), it is enlarged in the longitudinal direction (step 1134), and heated at a temperature equal to or higher than the flow beginning temperature of the elastomer (step 1135). Next, the nonelastic nonwoven fabric and the elastomer nonwoven fabric are bonded (step 1136) to manufacture a composite sheet.

For the elastomer nonwoven fabric, nonwoven fabrics manufactured with a general melt blow method or spun-bonding method (Japanese Patent Laid-open No.55249/86) can be utilized, or the spinning method in an earlier invention by the present inventors (Japanese Patent Laid-open No.242960/90) can be utilized, but the present invention is not limited thereto. The elongation of the elastomer nonwoven fabric and the bonding of the nonelastic nonwoven fabric to the elastomer nonwoven fabric can be performed using the means for bonding the nonwoven fabric to the film described in the fourth or fifth embodiment.

When the elastomer web is made from nonwoven fabric, openings for air permeability or the like are fine since they are formed of gaps between fibers in the elastomer. However, even the fine openings does not impair air permeability or moisture permeability because the openings are widened at the elongation step thereafter. The aligned direction of the fibers in the elastomer when the elastomer web is made from nonwoven fabric is preferably perpendicular to the aligned direction of the nonelastic fibers in the nonwoven fabric to be bonded thereto from the viewpoint of the utilization efficiency of the elastomer in the elasticity direction of the composite sheet in consideration of the shapes of the openings after widening at the elongation step. In other words, at the elongation step of the elastomer nonwoven fabric, it is preferable to elongate the elastomer web in the aligned direction of the fibers in the elastomer. This allows the openings in the nonwoven fabric made from elastomer fibers to be easily formed into long shape in one direction. Slits may also be formed to add opening portions in the elastomer nonwoven fabric similarly to the films.

In this manner, even when the elastomer web is made from nonwoven fabric, the elongation (including heat treatment for eliminating elongation stress) and the bonding to the nonwoven fabric made from nonelastic fibers can be performed using the aforementioned various apparatuses appropriately selected and the aforementioned methods in accordance with the aligned direction of the fibers.

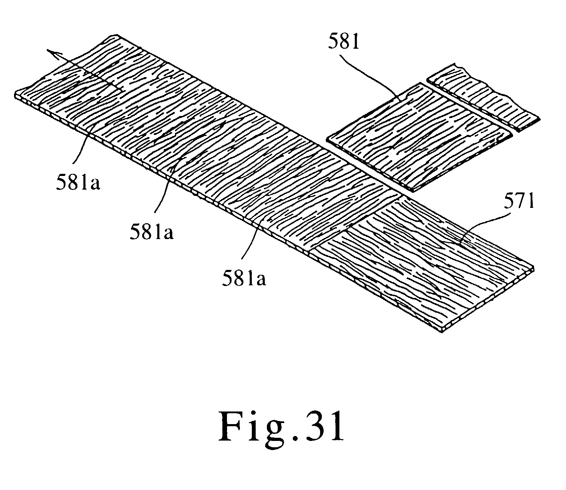

When the aligned direction of the fibers in the nonwoven fabric made from nonelastic fibers is equal to the aligned direction of the elastomer fibers, overlaying means referred to as an cross overlaying machine can be used to bond them. In the cross overlaying machine, as shown in Fig. 31, nonwoven fabric 581 made from elastomer is supplied in a direction perpendicular to the carrying direction of nonwoven fabric 571 made from nonelastic fibers. They are bonded with a heat pressing apparatus, not shown, thereby obtaining a composite sheet having the nonelastic fibers and the elastomer fibers arligned in perpendicular directions. The composite sheet obtained with this method has a width equal to the width of the nonwoven fabric. Therefore, when nonwoven fabric 581 made from elastomer fibers is supplied, it is continuously overlaid on nonwoven fabric 571 made from nonelastic fibers in a state where it is cut in accordance with the width of nonwoven fabric 571 such that an overlapping portion with previously supplied nonwoven fabric 581a is minimized.

The elastomer web may be in the form of a net, knit or weave formed from yarns of a thermoplastic elastomer, in addition to the aforementioned film having openings or the nonwoven fabric.

(Seventh Embodiment)

While the aforementioned fourth to sixth embodiments provide an example in which the nonelastic fibers and the elastomer web are bonded to obtain the composite sheet having elasticity either in the longitudinal direction or in the transverse direction, the elastomer web used herein can be applied to a elastic web which can be elongated in at least two directions.

In a seventh embodiment, description will be made for a elastic web which can be elongated in at least two directions. Elastic webs of this type can be both single webs and laminated webs in terms of the structure.

(A) Single Web

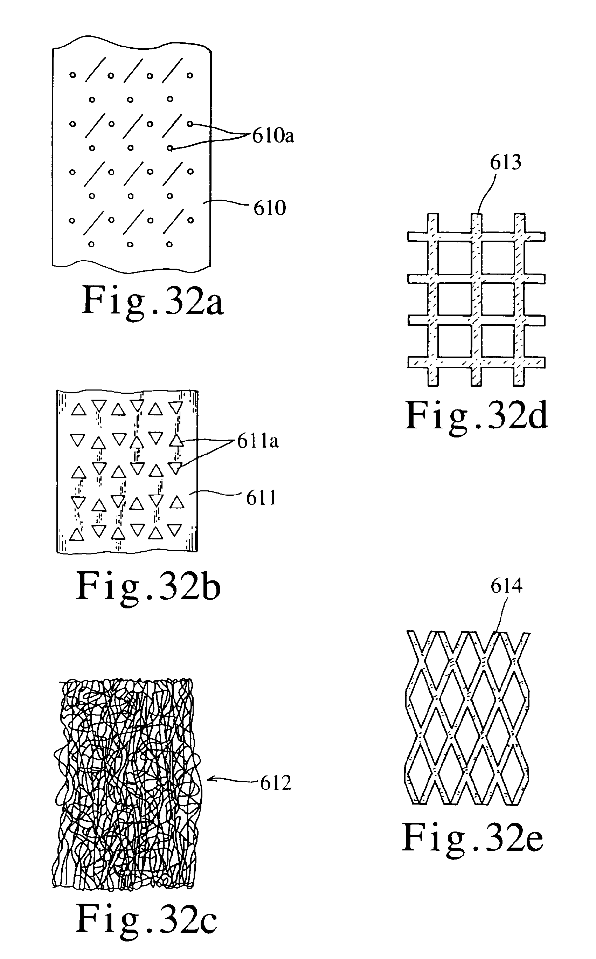

Figs. 32a to 32e show various examples of a material web before elongation which is used for manufacturing the elastic web having elasticity in two or more directions.

An example shown in Fig. 32a is film 610 made from thermoplastic elastomer having a plurality of circular punched holes 610a formed therein. An example shown in Fig. 32b is film 611 made from thermoplastic elastomer having a plurality of triangular punched holes 611a formed therein. An example shown in Fig. 32c is material web 612 in a nonwoven fabric-like pattern made from filaments of a thermoplastic elastomer. An example shown in Fig. 32d is material web 613 in net shape with a rectangular-shaped mesh made from thermoplastic elastomer. An example shown in Fig. 32e is material web 614 in net shape with a rhombus-shaped mesh made from thermoplastic elastomer.

Films 610, 611 and material webs 612, 613 and 614 shown in Figs. 32a to 32e are elongated in biaxial or longitudinal and transverse directions or multi-axis direction and then, in that state, subjected to heat treatment to eliminate the contractile force, thereby obtaining elastic webs.

Next, description will be made for an example of an apparatus used in elongating a material web in biaxial or longitudinal and transverse directions and performing heat treatment using a tentering stretching apparatus used for biaxial stretching of films.

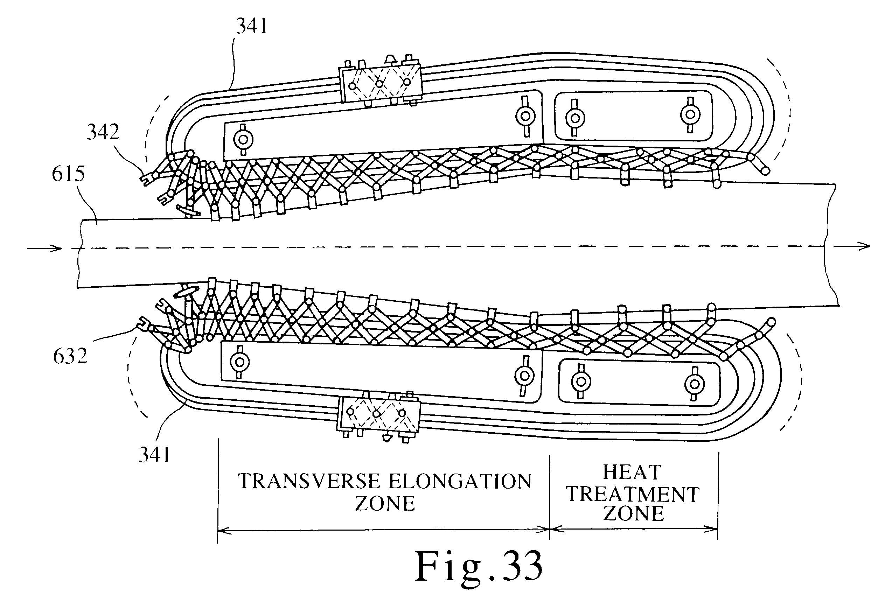

Fig. 33 shows a schematic plan view of an example of an apparatus for elongating a material web in biaxial directions and performing heat treatment. As shown in Fig. 33, the apparatus includes two rails 341 disposed with space the transverse direction. Each of rails 341 has a track long in the moving direction of film 615. A plurality of grips 342 are attached to each of rails 341 via a pantograph mechanism provided over the entire track. Film 615 supplied between two rails 341 is held at both side edges by grips 342 and moved in the direction shown by arrows in Fig. 33 by means of the pantograph mechanism rounding rails 341.

The interval between respective rails 341 is gradually increased toward the downstream in the moving direction of film 615, and then substantially parallel. Film 615 is elongated transversely in a transverse elongation zone in which the interval between rails 341 is gradually increased, and is heated in a heat treatment zone after that at a temperature equal to or higher than the flow beginning temperature of the thermoplastic elastomer to eliminate the contractile force. In Fig. 33, a heat source provided in the heat treatment zone is not shown, but typically, hot wind, an infrared heater or the like is used as a heat source.

The pantograph mechanism is operated in the aforementioned transverse elongation zone such that the interval between adjacent grips 342 is gradually increased as grips 342 move associated with the working of the pantograph mechanism. This causes film 615 to be elongated longitudinally simultaneously with the transverse elongation.

The tentering stretching apparatus is advantageous in that it can freely control the temperature in the transverse elongation zone and the heat treatment zone and it can ensure a long time for the heat treatment.

While grips 342 hold the both side edges of film 615 in the apparatus shown in Fig. 33, the present invention is not limited thereto, and the film can be held by putting pins into the film or by another holding means. Fig. 33 shows the apparatus having the pantograph mechanism which can change the interval between grips 342. However, if the apparatus is configured such that pantograph mechanism is not used and grips 342 simply moves along the tracks of rails 341, the film can be elongated only in the transverse direction.

The apparatus is also advantageous in that the biaxial elongation can produce a thinner and more flexible web, and also produce a large-width web from a small-width web.

While description has been made for the example of tentering scheme as means for biaxially elongating the film, the biaxial elongation of the film is not limited to the tentering apparatus, and biaxial elongation means using a pulley stretching apparatus may be used as disclosed in Japanese Patent No.60408/89, Japanese Patent Publication No.10851/92, Japanese Patent Publication No.72455/91. Stretching means such as tubular biaxial stretching or multi-axis stretching can be used as means for obtaining a elastic web having elasticity in at least two directions in the present invention.

(B) Laminated Web

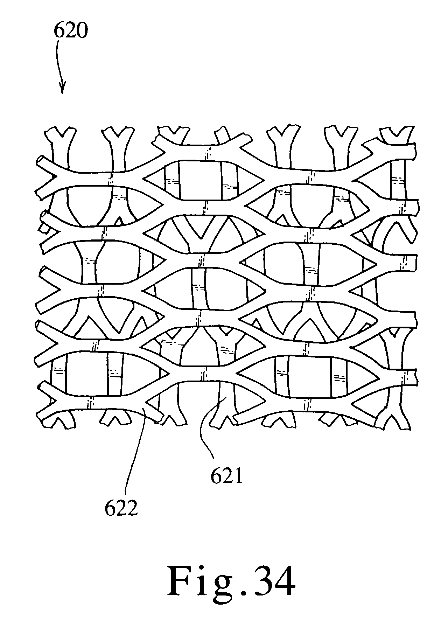

Referring to Fig. 34, there is shown a elastic web having elasticity in at least two directions obtained by overlaying a plurality of webs with different elasticity directions.

Elastic web 620 shown in Fig. 34 is formed by bonding longitudinally elongated film 621 to transversely elongated film 622. Longitudinally elongated film 621 has a longitudinally long opening pattern similar to that shown in Fig. 25b formed by elongating longitudinally and subjecting to heat treatment. Transversely elongated film 622 has a transversely long opening pattern similar to that shown in Fig. 18b formed by elongating transversely and subjecting to heat treatment. Since longitudinally elongated film 621 and transversely elongated film 622 are made from thermoplastic elastomer, both of them are easily bonded only by heating at least one of longitudinally elongated film 621 and transversely elongated film 622. Therefore, a laminated web can be simply obtained at low cost without using an adhesive or the like.

While Fig. 34 illustrates the films used as webs for description, nonwoven fabrics may be used as webs in addition to the films as shown in the sixth embodiment.

While the nonwoven fabrics made from thermoplastic elastomer are typically manufactured using a spun-bonding method or melt blow method which is a typical spinning method of nonwoven fabrics, the present invention is not limited thereto, and long fiber nonwoven fabrics or short fiber nonwoven fabrics are applicable. Above all, the manufacture is preferably performed using spinning methods and stretching methods disclosed in Japanese Patent Publication No.6126/95, Patent Publication No.2612203, Japanese Patent Laid-open No.204767/98 which are earlier inventions by the present inventors. The nonwoven fabrics manufactured by these methods have air permeability and moisture permeability. The elongation and heat treatment of the nonwoven fabric can be performed as the films.

For overlaying the webs, the apparatus shown in Fig. 13 can be used when the webs have elongation directions different from one another, while the cross overlaying machine as described using Fig. 31 can be employed if the webs having the elasticity in the same direction are perpendicularly laminated to manufacture a laminated web having elasticity in both longitudinal and transverse directions. When the cross overlaying machine is used, particularly preferable machines are those disclosed in Japanese Patent Publication No. 38783/78, Japanese Patent Publication No.40185/75, and Japanese Patent Publication No.54582/82 which are earlier inventions by the present inventors.

In bonding nonwoven fabrics, ultrasonic bonding, high frequency bonding, physical bonding methods such as needle punch, water jet or the like can be used in addition to the aforementioned methods.

In the aforementioned bi-axially elongated web or laminated web, the resulting product can be a web having elasticity not only in the longitudinal direction and transverse direction but also in directions at 45 degrees or other directions.

(Eighth Embodiment)

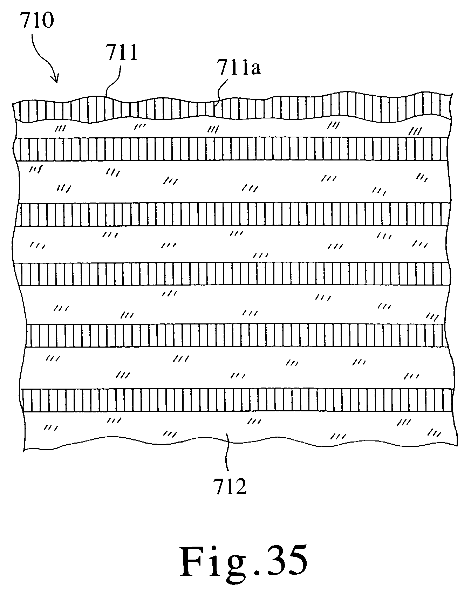

Referring to Fig. 35, there is shown composite sheet 710 according to an eighth embodiment of the present invention in which, over one surface of nonwoven fabric 711 having nonelastic fibers 711a aligned and stretched substantially longitudinally, rubber elastic material 712 is provided in a stripe pattern in a direction perpendicular to the aligned direction of fibers 711a. Rubber elastic material 712 is arranged at intervals which serve as air holes.

Since the configuration and characteristics of nonwoven fabric 711 used for this composite sheet 710 are similar to those described in the first embodiment, detailed description thereof is omitted.

Such nonwoven fabric 711 is provided with rubber elastic material 712 arranged at intervals in a direction perpendicular to the aligned direction of fibers 711a, thereby obtaining composite sheet 710 which is elastic transversely but is hardly elastic longitudinally with favorable dimensional stability.

Additionally, as described above, the patterning of rubber elastic material 712 long in the direction perpendicular to the aligned direction of the fibers enhances the utilization efficiency of the rubber elastic material material in the elasticity direction of composite sheet 710, i.e. the transverse direction, making it possible to ensure effective elasticity with a small amount of rubber elastic material. Only a small amount of the rubber elastic material required means not only a reduction in cost of the rubber elastic material but also a corresponding reduction in weight of composite sheet 710 and thus the range of uses is increased.

As rubber elastic material 712, a rubber elastic material material having elasticity such as an elastomer of polyolefin base, synthetic rubber, polyester base, polyamide base, polyurethane base, or natural rubber is used. Of these materials, synthetic rubber base or polyurethane base materials in which styrene and olefin base monomers are copolymerized are preferable as rubber elastic material material 712 used in the present invention due to a high factor elasticity and a small stress at expanding. Particularly, a synthetic rubber of SEBS is most preferable.

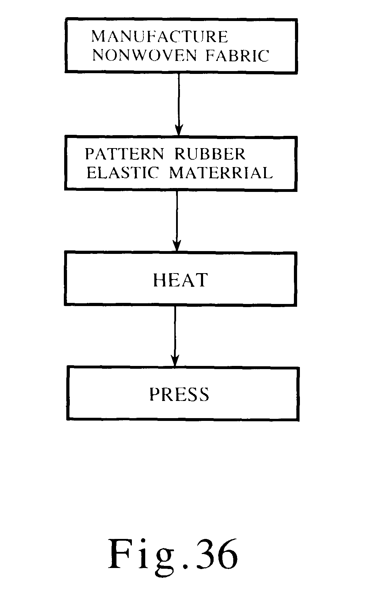

Next, a method of manufacturing the aforementioned composite sheet 710 will be described using an example where a thermoplastic elastomer is used as rubber elastic material material 712 with reference to a flow chart in Fig. 36.

First, an appropriate spinning apparatus is used to form a web having fibers 711a aligned substantially longitudinally, and the web is stretched longitudinally, i.e. the aligned direction of fibers 711a to manufacture nonwoven fabric 711 (step 1201).

Next, rubber elastic material material powder or a liquid including the rubber elastic material material is applied on nonwoven fabric 711 in a pattern shown in Fig. 35 (step 1202), and nonwoven fabric 711 with the rubber elastic material material being patterned thereon is heated at a temperature equal to or higher than the flow beginning temperature of the rubber elastic material material (step 1203).

When the thermoplastic elastomer is used as the rubber elastic material material, the thermoplastic elastomer is preferably used in the form of powder in the patterning on nonwoven fabric 711. The thermoplastic elastomer powder can be directly obtained in the process of the polymerization of the elastomer and can be used as it is in that state in many cases. The manufacture cost is thus lower, and in rubber elastic material material having unfavorably formability, it is significantly advantageous to allow the manufacture of a product directly from the powder.

Finally, nonwoven fabric 711 with the rubber elastic material material being patterned thereon is pressed in a heated state at a temperature equal to or higher than the flow beginning temperature (step 1204) to bring the rubber elastic material material into close contact with nonwoven fabric 711, thereby obtaining composite sheet 710. When the rubber elastic material material in a powder state is used, the grains of the powder are mutually integrated at this point.

The aforementioned respective steps will be hereinafter described in detail.

(8-a) Nonwoven Fabric Manufacturing Step

Since nonwoven fabric 711 having fibers 711a aligned and stretched longitudinally can be manufactured similarly to that in the aforementioned first embodiment, detailed description thereof is omitted.

(8-b) Rubber Elastic Material Patterning Step

(8-c) Heating Step

(8-d) Pressing Step

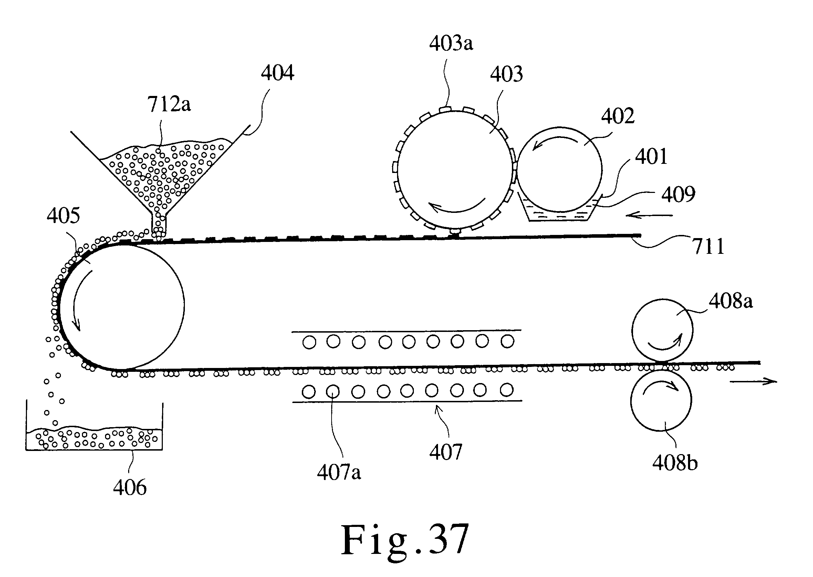

These three steps are performed in series while nonwoven fabric 711 obtained as described above is carried. These steps will be described sequentially with reference to an apparatus in Fig. 37.

The apparatus shown in Fig. 37 manufactures the composite sheet of the nonwoven fabric and the rubber elastic material by using thermoplastic elastomer powder 712 as a rubber elastic material material, continuously moving nonwoven fabric 711 at the same time applying thermoplastic elastomer powder 712a to nonwoven fabric 711 in a predetermined pattern, and performing heating and pressing.

In Fig. 37, liquid 409 for patterning is contained in pot 401, and pot roller 402 is provided such that a portion of the peripheral surface thereof is soaked in liquid 409 for patterning. Pot roller 402 is in contact with transfer roller 403 provided on its peripheral surface with projections 403a corresponding to a pattern of the rubber elastic material to be provided on nonwoven fabric 711. The peripheral surface of transfer roller 403 is also in contact with carried nonwoven fabric 711. Liquid 409 for patterning in pot 401 is attached via pot roller 402 to projections 403a of transfer roller 403 which comes into contact with nonwoven fabric 711, thereby applying liquid 409 for patterning to the surface of nonwoven fabric 711 in a pattern corresponding to projections 403a of transfer roller 403.

Liquid 409 for patterning is provided for facilitating the selective attachment of thermoplastic elastomer powder 712a onto the surface of nonwoven fabric 711, as later described. As liquid 409 for patterning, water containing a surfactant, or a liquid containing an adhesive, specifically a rubber emulsion adhesive, a thickener or the like is used.

Hopper 404 for storing thermoplastic elastomer powder 712a is provided on the downstream side from transfer roller 403 in the moving direction of nonwoven fabric 711. Hopper 404 is provided for putting powder 712a on nonwoven fabric 711 which has liquid 409 for patterning applied thereon. Hopper 404 is provided on its bottom end with a nozzle having a width equal to the width of nonwoven fabric 711 such that powder 712a within hopper 404 is thoroughly put on the upper surface of nonwoven fabric 711.

Nonwoven fabric 711 having powder 712a put thereon is then turned by reversal roller 405 by 180 degrees and moved upside down. At this point, powder 712a in the portions on which liquid 409 for patterning is applied is still attached to nonwoven fabric 711 with the surface tension or adhesion of the liquid. On the other hand, powder 712a in the portions on which no liquid 409 for patterning is applied falls by gravity and is held in powder receiver 406 disposed below reversal roller 405. As a result, nonwoven fabric 711 has powder 712a attached only in the portions on which liquid 409 for patterning is applied.

The nonwoven fabric is turned to drop unnecessary powder 712a in this example. However, if powder 712a is put on the entire upper surface of nonwoven fabric 711 and then air is blown to nonwoven fabric 711, powder 712a can be removed in the portions on which no liquid 409 for patterning is applied while a surface of nonwoven fabric 711 bonding to rubber elastic material 712 (Fig. 35) still faces upward.

Nonwoven fabric 711 to which thermoplastic elastomer 712a is selectively attached in a predetermined pattern as described above is subjected to heat treatment through heating furnace 407 having infrared heaters 407a. Powder 712a is heated at a temperature equal to or higher than the flow beginning temperature in this section.

Nonwoven fabric 711 after passing through heating furnace 407 is subjected to pressing by nip rolls 408a, 408b in a state where it is heated at the flow beginning temperature of powder 712a or higher. This integrates the grains of the powder and enhances the contact of the thermoplastic elastomer with nonwoven fabric 711.

As described above, the bonding of rubber elastic material 712 to nonwoven fabric 711 is performed in a series of steps by directly patterning the rubber elastic material material on nonwoven fabric 711 and performing heat treatment thereof, which eliminates the need for the step of individually manufacturing rubber elastic material 712 of unfavorable workability and the step of bonding nonwoven fabric 711 to rubber elastic material 712. As a result, composite sheet 710'can be conveniently and efficiently manufactured.

The embodiment illustrates the method in which powder 712a is put on the entire upper surface of nonwoven fabric 711 and then powder 712a is removed in the portions requiring no powder as a method of selectively attaching thermoplastic elastomer powder 712a to nonwoven fabric 711 having liquid 409 for patterning applied thereto in a predetermined pattern. Another example will be described in the following.

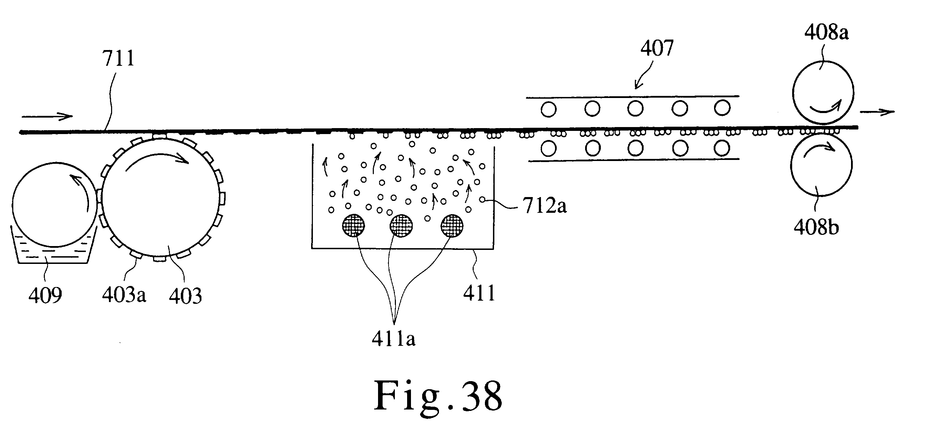

Fig. 38 is a schematic diagram showing another example of an apparatus for manufacturing the composite sheet according to the present invention. In Fig. 38, the same components as those in Fig. 37 are designated with the same reference numerals as those in Fig. 37, and detailed description thereof is omitted.

In the apparatus shown in Fig. 38, nonwoven fabric 711 is carried with its surface to which rubber elastic material 712 (Fig. 35) is to be bonded facing downward. Powder flow bath 411 for storing thermoplastic elastomer powder 712a is disposed below nonwoven fabric 711 between transfer roller 403 and heating furnace 407 in the carrying path of nonwoven fabric 711. Powder flow bath 411 comprises a container having an open top surface in which fans 411a for blowing air are disposed. The operation of fans 411a generates air flow in powder flow bath 411 to cause powder 712a in powder flow bath 411 to be blown toward nonwoven fabric 711.

As nonwoven fabric 711 to which liquid 409 for patterning is applied in a predetermined pattern passes over powder flow bath 411, powder 712a comes into contact with nonwoven fabric 711. At this point, powder 712a in contact with the portions to which liquid 409 for patterning is applied remains attached to nonwoven fabric 711 with the surface tension or adhesion of the liquid. On the other hand, powder 712a in contact with the portions to which no liquid 409 for patterning is applied falls without attachment to nonwoven fabric 711. As a result, powder 712 is attached only to the portions of nonwoven fabric 711 to which liquid 409 for patterning is applied.

Thereafter, nonwoven fabric 711 having thermoplastic elastomer 712a selectively attached in a predetermined pattern is subjected to heat treatment in heating furnace 407 and to pressing with nip rollers 408a, 408b, similarly to the apparatus shown in Fig. 37.

While the embodiment illustrates rubber elastic material 712 provided on nonwoven fabric 711 in the pattern shown in Fig. 35, the pattern of rubber elastic material 712 can be arbitrarily changed by modifying the pattern of projections 403a provided on transfer roller 403 of the apparatus shown in Fig. 37 or Fig. 38.

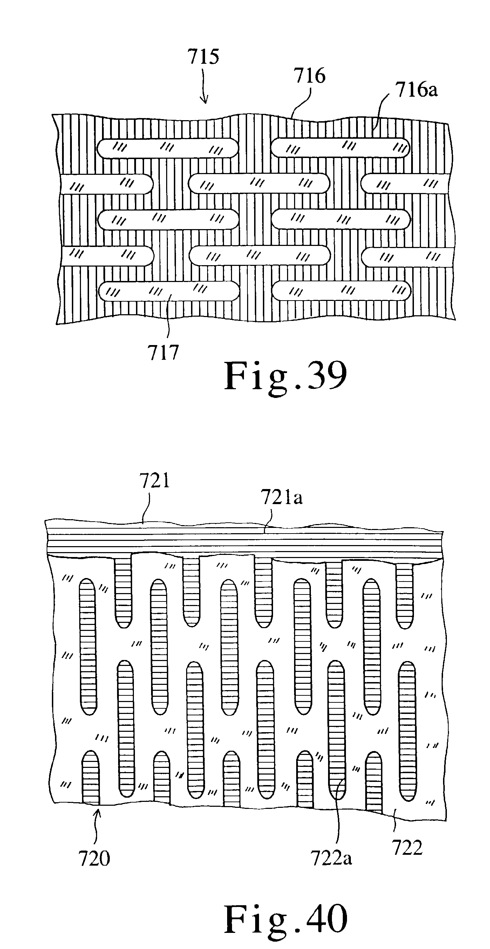

For example, in composite sheet 715 shown in Fig. 39, rubber elastic material 717 is provided in an elongated island pattern in a direction perpendicular to the aligned direction of fibers 716a of nonwoven fabric 716. Rubber elastic material 717 provided in such an island pattern also achieves elasticity similar to that of composite sheet 710 shown in Fig. 35.

(Ninth Embodiment)

Referring to Fig. 40, there is shown composite sheet 720 according to a ninth embodiment of the present invention. In composite sheet 720 shown in Fig. 40, rubber elastic material 722 is provided in a pattern with a number of openings 722a long in the longitudinal direction over one surface of nonwoven fabric 721 having fibers 721a aligned and stretched substantially transversely.

Composite sheet 720 of the embodiment has nonwoven fabric 721 and rubber elastic material 722 opposite to those in the eighth embodiment in terms of longitudinal and transverse directions. Therefore, its characteristics are also opposite to those of the composite sheet described in the eighth embodiment in terms of longitudinal and transverse directions. Specifically, composite sheet 720 of the embodiment is elastic longitudinally but is hardly epanded transversely with favorable dimensional stability. Other characteristics such as air permeability (moisture permeability), high utilization efficiency of the elastomer and the like are similar to those in the eighth embodiment. The same materials constituting nonwoven fabric 711 and elastomers as those in the eighth embodiment can be used.

Composite sheet 720 in the embodiment is basically manufactured through the respective steps shown in Fig. 36 similarly to the composite sheet in the eight embodiment. However, since nonwoven fabric 721 has fibers 721a aligned substantially transversely, steps of manufacturing nonwoven fabric 721 are different from those in the eight embodiment.

Methods for manufacturing nonwoven fabric 721 having fibers 721a aligned transversely include those, for example, disclosed in Japanese Patent Publication No.36948/91, Japanese Patent Laid-open No. 6126/95, Japanese Patent No.2612203, Domestic Republication of PCT International Publication for Patent Application WO9617121, Japanese Patent Laid-open No.204764/98, Japanese Patent Laid-open No. 222759/99, or the like. Nonwoven fabric 721, even when manufactured with such other manufacturing methods, can be used as long as elongation in one direction is 100% or higher.

Next, the nonwoven fabric having fibers 721a aligned transversely is stretched transversely. The transverse stretching of the nonwoven fabric can be performed using, for example, the apparatus shown in Fig. 11.

After nonwoven fabric 721 having fibers 721a aligned and stretched transversely is manufactured, composite sheet 720 is manufactured using the apparatus shown in Fig. 37, the apparatus shown in Fig. 38 or the like. Specifically, thermoplastic elastomer powder is attached to nonwoven fabric 721 in the pattern of rubber elastic material 721 shown in Fig. 40, and nonwoven fabric 721 is heated and then pressed, thereby obtaining composite sheet 720.

While the eight and ninth embodiments illustrate the composite sheet obtained by applying the rubber elastic material onto the nonwoven fabric in a predetermined pattern, the method of applying the rubber elastic material onto the nonwoven fabric is not limited to those shown in the aforementioned embodiments, and various methods can be employed. In the following, other example of the method of applying the rubber elastic material will be described.

The methods of patterning the rubber elastic material on the nonwoven fabric include, in addition to separate attachment of the liquid for patterning and the thermoplastic elastomer powder as in the described example, previously dispersing thermoplastic elastomer powder into a dispersant, an adhesive, specifically rubber emulsion adhesive, a rubber latex, a thickener or the like and applying the powder dispersed liquid in a predetermined pattern for direct patterning to the nonwoven fabric. The methods of applying the powder dispersed liquid at this point include application utilizing known printing dyeing means by using the powder dispersed liquid as a dye. Alternatively, typical powder coating schemes, for example electrostatic coating can be used without using the liquid for patterning.

Additionally, the rubber elastic material in the patterning may be in liquid form containing the rubber elastic material in addition to the thermoplastic elastomer powder. In this case, for example, the liquid containing the rubber elastic material is used as printing ink and applied to the nonwoven fabric in a predetermined pattern with a known printing machine, or the liquid containing the rubber elastic material is used as a dye and applied to the nonwoven fabric in a predetermined pattern with a known printing dyeing machine.

The liquid containing the rubber elastic material include a synthetic rubber base emulsion, a natural rubber latex, a solution in which rubber is dissolved in a solvent, or the like. In any case, a cross-linking agent is added, and as required, an additive such as another adhesion inhibitor is added to them before use. After the application of the liquid containing the rubber elastic material to the nonwoven fabric, drying or heat treatment is performed for removing the solvent in the solution in water within the emulsion and for promoting the reaction of the cross-linking agent, thereby bringing the rubber elastic material into contact with the nonwoven fabric. Pressing or the like is performed as required in a heated state to enhance the contact with the nonwoven fabric.

The composite sheet according to the present invention has elasticity in one direction as described above, and is suitable specifically for elastic portions such as base materials for tie tapes, elastic portions of hygiene products, interlinings for clothes, base materials for elastic adhesive bandages, elastic support bandages, supporters for medical use, elastic portions of diapers, poultice base materials, elastic members for clothes in collars, ends of sleeves or waist portions, elastic portions in operating gowns or caps for medical use, artificial leathers, base cloths for gloves, suspenders, belts, garters, base cloths for masks, arm covers, base cloths for elastic clothes, corsets.

According to the present invention, since a small amount of a rubber elastic material can most efficiently exert elasticity and a composite sheet can be obtained with a convenient and efficient forming method, the composite sheet of the present invention is favorably mass-produced.

The nonwoven fabric used in the present invention is stretched in one direction having filaments aligned in one direction with the best efficiency such that it is suited for obtaining large elongation in a direction perpendicular to the aligned direction of the filaments, and the elongation characteristic is not impaired even with a small fiber amount per square meter of the nonwoven fabric. Therefore, the amount of the nonwoven fabric can be reduced, and also in terms of that reduction, the sheet can be provided with low cost.

On the other hand, the elastic web according to the present invention has elasticity in one direction or at least two directions by itself, but it is bonded to another elastic material, for example to a nonwoven fabric or the like to be preferably used for the aforementioned applications.

As described above, the present invention has been described with the typical embodiments thereof used as examples. In the following, specific embodiments and comparative examples of the present invention will be given.

Examples of Composite Sheet

(Example 1-1)

First, a longitudinally stretched nonwoven fabric was manufactured as follows.

A PET (Polyethylene Terephthalate) molten resin at [η] 0.63 dl/g was spun from melt blow die 1 shown in Fig. 2 at a nozzle diameter of 0.3 mm, die temperature of 300 °C, hot wind temperature of 350 °C. At this point, heated air at high pressure was ejected from one air chamber 5a at 4 liter/minute/nozzle, and from the other air chamber 5b at 5 liter/minute/nozzle. Inclination angle α of nozzle 3 was 12 degrees. Spray nozzles 8a, 8b sprayed atomized water to a position 250 mm away from nozzle 3 to set angle β at 45 degrees.

Conveyor 7 comprised a screen with 2 mm mesh traveling at 10 m/minute, and was disposed to form angle γ of 25 degrees with respect to the horizontal plane. Negative pressure sucking nozzle 10 had the same width of that of web 9 and was disposed to have a gap of 8 mm between itself and the back side of conveyor 7 at the arrival point of the filaments.

Web 9 on conveyor 7 was preheated to 85 °C by a cylinder with a diameter of 500 mm and then nipped onto stretching cylinder 11 by retaining rubber roll 13. The stretching point was heated in the width direction by infrared line heater 32 shown in Fig. 5b to longitudinally stretch the web by a factor of 2.5.

Next, the stretching apparatus shown in Fig. 3 was used to perform stretching. However, in this example, stretching roll 51 was used as a heat treatment roll and heat treatment roll 54 was used as a cooling cylinder. Specifically, the temperatures of preheat roll 43 and stretching roll 45 were set at 85 °C to stretch the web by a factor of two between P and Q. A cover was put over the section between stretching roll 48 at 120 °C and stretching roll (51) at 165 °C to form a steam room within the cover in which the web was further stretched by a factor of 1.2. The web was shrunk 3% between stretching roll (51) and cooling cylinder (54).

The resulting nonwoven fabric had a fiber amount per square meter of 35 g/m$^2$, elongation of 10% in the longitudinal direction, a strength of 2.3 g/d in the longitudinal direction, elongation of 200% in the transverse direction, a strength of 0.3 g/d in the transverse direction. The elongation and strength of the nonwoven fabric were values at break.

Next, the longitudinally stretched nonwoven fabric obtained as described above was introduced to guide cylinder 83 of the apparatus shown in Fig. 4, at the same time the elastomer was sprayed from spray head 87, thereby bonding the elastomer to the nonwoven fabric to manufacture a composite sheet. As the elastomer, SEBS, KratonG (product name: made by Shell Chemical Co.) made by Shell Japan Co, Ltd. was used. The spinning head had an outer diameter of 200 mm and two nozzles. The spinning head was rotated at 1500 r.p.m. and the elastomer was spun to the nonwoven fabric. The guide cylinder had an inner diameter of 500 mm. The strand of the elastomer spun to the nonwoven fabric had a diameter of 0.5 mm.

The resulting composite sheet was characterized by elongation of 10% in the longitudinal direction and elongation of 300% in the transverse direction. The elongation of the composite sheet represents the maximum elastic elongation in the transverse direction, and represents elongation at break in the longitudinal direction. When elongation of a composite sheet is presented in the following examples, similarly, the elongation in a direction with a larger elongation is the maximum elastic elongation, while the elongation in a direction with a smaller elongation is the elongation at break.

(Example 1-2)

An elastomer web having orientation in the transverse direction manufactured using the apparatus shown in Fig. 9a to Fig. 9c was bonded onto a longitudinally stretched nonwoven fabric manufactured similarly to the example 1-1 using the apparatus shown in

Fig. 13 to manufacture a composite sheet. The elastomer similar to that in the example 1-1 was used.

The resulting composite sheet was characterized by elongation of 10% in the longitudinal direction and elongation of 200% in the transverse direction.

(Example 1-3)

A spun-bonded nonwoven fabric (amount per square meter of 80 g/m²) available on the market was stretched by a factor of 2.5 in horizontally direction at hot air temperature of 120 °C, using stretching apparatus shown in Fig. 11, whereby a horizontally stretched nonwoven fabric of which amount per square meter of 38 g/m² was manufactured. The resulting nonwoven fabric had a strength of 1.7 g/tex in the vertical direction, elongation of 108% in the vertical direction, a strength of 13.5 g/tex in the horizontal direction, elongation of 22% in the horizontal direction.

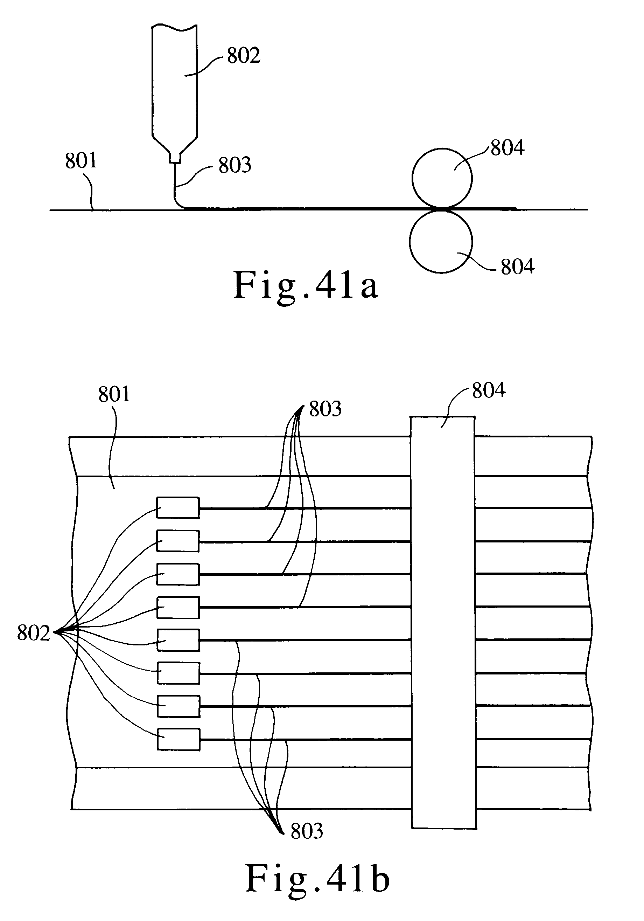

Next, as shown in Figs. 41a and 41b, while feeding the horizontally stretched nonwoven fabric 801, thermoplastic elastomer 803 was pushed out from a large number of filament dies 802 arranged 5 mm pitch in width direction. The strands of the vertical direction were formed on the nonwoven fabric 801 by the thermoplastic elastomer 803. SEBS (styrene - ethylene butylene - styrene) base polymer (Kraton G1657 of Shell Japan Co. Ltd.) was used as the thermoplastic elastomer 803. The strands of the elastomer 803 and the nonwoven fabric 801 were integrated by pinching before the elastomer 803 solidifies, and were coolrd with nip rolls 804 and a composite sheet which shows large elasticity in the vertical direction was obtained. The fineness of the elastomer was 500tex.

The elongation of the composite sheet was 270% in the vertical direction, the strands ware not peeled off from the nonwoven fabric 801 even if the composite sheet was elongated 200% in vertical direction 5 times. Moreover, the residual strain of the composite sheet was 18%.

(Example 1-4)

First, a polyethylene terephthalate resin (IV value 0.62) was used to provide a nonwoven fabric stretched longitudinally by a factor of 5.2 (basis weight 15g/m²) with the scheme described in Japanese Patent Application No.10-34242. The nonwoven fabric had a strength of 1.6 g/d in the longitudinal direction, elongation of 14% in the longitudinal direction, and a strength of 0.04 g/d in the transverse direction, elongation of 185% in the transverse direction. The strength and elongation of the nonwoven fabric were measured in compliance with JIS L1906 (Test methods for non-woven fabric made of filament yarn), and the strength was represented with conversion to denier so as to adapt to various basis weights.

Next, the longitudinally stretched nonwoven fabric was supplied to the apparatus shown in Fig. 37, and liquid 409 for patterning was applied to the nonwoven fabric with transfer roller 403. The pattern of liquid 409 for patterning to be attached to the nonwoven fabric was that of the rubber elastic material shown in Fig. 39. Liquid 409 for patterning was 0.4% aqueous solution of polyethylene oxide (PEO-15 made by Sumitomo Seika Chemicals Co, Ltd.) which has increased viscosity of water to provide adhesion. After the application of liquid 409 for patterning, thermoplastic elastomer powder 712a was dropped from hopper 404 on the nonwoven fabric, and then, the nonwoven fabric was turned by reversal roller 405 to leave powder 712a on the nonwoven fabric in the pattern shown in Fig. 39. As powder 712a, the copolymerized polymer of styrene and ethylene butylene ( Kraton G1652 of Shell Japan Co, Ltd.) was used. The nonwoven fabric having powder 712a attached only to the portions to which liquid 409 for patterning was applied was heated by heating furnace 407 at 230 °C and pressed by nip rollers 408a, 408b. This flattened powder 712a and enhanced the adhering of the elastomer and the nonwoven fabric, thereby obtaining a composite sheet.

The resulting composite sheet had elongation of 16% in the longitudinal direction and 420% in the transverse direction. The repeated elongation of 200% of the composite sheet in the transverse direction on ten times showed a stress reduction rate of 21% at elongation of 200% and residual strain of 12%, thar results indicated that the composite sheet was practicable as a transversely elastic sheet.

(Example 1-5)

A polypropylene resin (MFR520) was used to provide a nonwoven fabric (basis weight 20g/m$^2$) obtained by transversely stretching a spun nonwoven fabric with a transverse arrangement by a factor of 5.8 with the scheme described in Japanese Patent Publication No.6126/95. The nonwoven fabric had a strength of 0.05 g/d in the longitudinal direction, elongation of 220% in the longitudinal direction, a strength of 2.1 g/d in the transverse direction, elongation of 18% in the transverse direction.

Next, thermoplastic elastomer powder was attached to the transversely stretched nonwoven fabric in the pattern of the rubber elastic material shown in Fig. 40 with flexography using a cross-linking agent mixed in a natural rubber latex to obtain a composite sheet. The natural rubber latex had solid matters of 60% and contains ammonia of 0.2%. The cross-linking agent containing zinc oxide, sulfur and reaction accelerator was used by mixing the latex solid matters and the cross-linking agent solid matters in the proportion of 100:5. The cross-linking was formed for three minutes at 110 °C.

The resulting composite sheet had elongation of 540% in the longitudinal direction and 21% in the transverse direction. The repeated elongation of 200% of the composite sheet in the longitudinal direction on ten times showed a stress reduction rate of 26% at elongation of 200% and residual strain of 15%, that results indicated that the composite sheet was practicable as a longitudinally elastic sheet.

(Example 1-6)

Raw material of a short fiber was put in the carding engine to obtain the carded web which amounts 50 g/m$^2$. The raw material was mixture of polyethylene telephthalate short fibers (0.25 tex, the length of 50 mm) and polyester base low melting point short fiber (MELTY 2080 of UNITIKA, LTD.). The ratio was 75% to 25%. This web was embossed at 180°C, and the nonwoven fabric made of longitudinally aligned short fibers was obtained. The resulting nonwoven fabric had a strength of 12.7 g/tex and elongation of 28 % in the vertical directon, a strength of 1.1 g/tex and elongation of 115 % in the horizontal direction. The strands (100 tex) of above mentioned SEBS base polymer was arranged on the nonwoven fabric in 3 mm pitch at the horizontal direction and pressed at 140 °C by using the same cross overlaying machine as it is described in Japanese Patent Publication No. 40185/75, Japanese Patent Publication No. 38783/78, or Japanese Patent Publication No. 57222/91, thereby a composite sheet which shows large strechability in the horizontal direction was obtained.

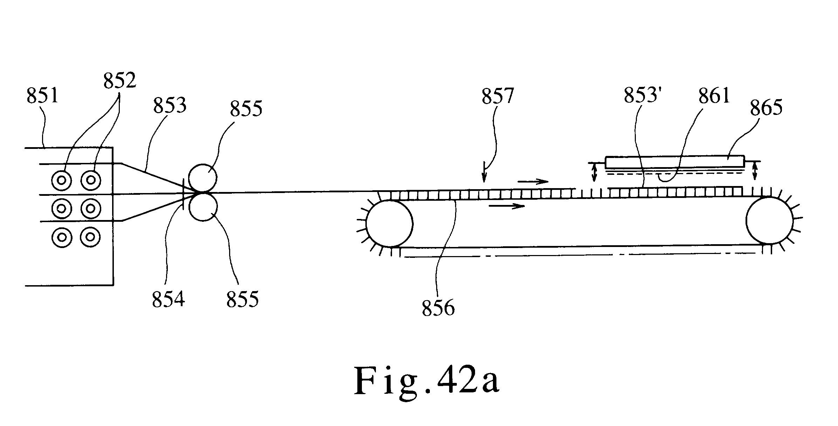

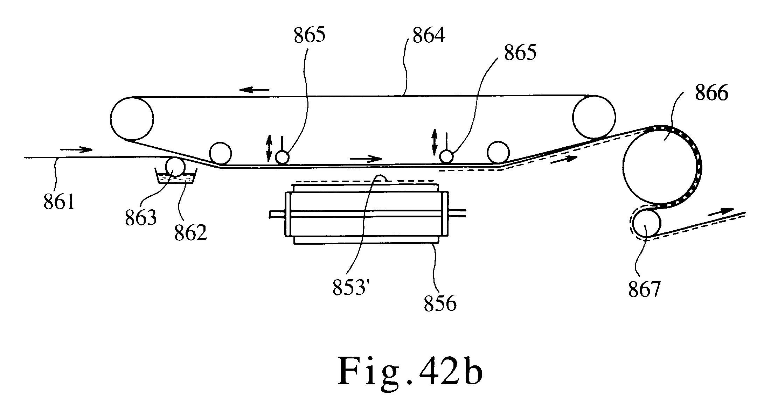

The overlaying process of the nonwoven fabric and the strands by the cross overlaying machine is explained with Figs. 42a and 42b. As shown in Fig. 42a, many strands 853 are wound on bobbins 852 in creel stand 851. The strands 853 are pulled out by nip rolls 855 through warping comb 854. The pulled strands 853 are arranged at regular intervals on lattice 856. Strands 853 on the lattice 856 are served as the group of strands 853' cut by cutter 857 in equivalent length to the width of the nonwoven fabric 861. On the other hand, as shown in Fig. 42b, an adhesive 862 is applied on the nonwoven fabric 861 by a kiss roll 863. The nonwoven fabric 861 on which applied the adhesive 862 is pressed against the group of strands 853' on the lattice 856 with belt 864 by belt push members 865. As a result, the group of strands 853' are transferred to the nonwoven fabric 861. Thereby, the group of strands 853' are arranged in the horizontal direction on the nonwoven fabric 861. The group of strands 853' and the nonwoven fabric 861 are unified by pinching with nip roll 867 after heated with heating cylinder 866, thereby the composite sheet which shows large strechability in horizontal direction was obtained.

Although the arrangement of the strands in horizontal direction is made by using the cross overlaying machine in this example, it may be made by weft inserting the strands of thermoplastic elastmer with weaving machine available on the market.

(Comparative Example 1-1)

An elastomer nonwoven fabric (with elongation of 200% in longitudinal and transverse directions) was integrated with a nonwoven fabric (with elongation of 25% in the longitudinal direction and elongation of 40% in the transverse direction) manufactured by conventional MB manufacturing equipment, using a calender roll. The resulting composite sheet was elongated 200% respectively in longitudinal and transverse directions, but at the same time the nonwoven fabric was broken at elongation of 25% in the longitudinal direction and elongation of 40% in the transverse direction, and the contact points were peeled.

(Comparative Example 1-2)

A nonwoven fabric (with elongation of 25% in the longitudinal direction and elongation of 30% in the transverse direction) manufactured by conventional SB manufacturing equipment was bonded to an elastomer base material. In the resulting composite sheet, the nonwoven fabric was broken and the contact points were peeled when deformation exceeds the elongation of the nonwoven fabric used.

Examples of Elastic Web

(Example 2-1: Transversely Elongated Film)

First, slits with a length of 5mm and a pitch of 2.5mm in the transverse direction were formed in a film with a thickness of 200 μm made from SEBS base resin (product name "KratonG1657" made by Shell Japan Co, Ltd.) in a staggered pattern as shown in Fig. 18. Next, the film having the slits formed therein was elongated transversely by a factor of 3.5 with the apparatus shown in Fig. 11, subjected to heat treatment at 135 °C to eliminate the contractile force of the film, and flattened with a heat pressing mechanism shown in Fig. 20, thereby obtaining a elastic web. The resulting web had a thickness of 32 μm with repeated elasticity in the transverse direction.

(Example 2-2: Longitudinally Elongated Nonwoven Fabric)

A nonwoven fabric (product name "Espansione" made by Kanebo, Ltd. with a basis weight of 50 g/m$^2$) made from polyurethane was stretched longitudinally by a factor of 3.8 with the apparatus shown in Fig. 27, subjected to heat treatment at 138 °C and to heat pressing, thereby obtaining a elastic web. The resulting web could resist repeated elongation of 200% in the longitudinal direction.

(Example 2-3: Biaxially Elongated Film)

Punched holes with a diameter of 1 mm as shown in Fig. 32a were formed in a film with a thickness of 300 μm made from thermoplastic elastomer (made by Kuraray Co, Ltd., product name "SEPTON 2063") which is a styreneisoprene base copolymer. Next, the film was stretched l longitudinally by a factor of 2 and transversely by a factor of 2.5 with the tentering biaxial stretching apparatus shown in Fig. 33 and subjected to shrinkage heat treatment of 10% in the longitudinal direction and 15% in the transverse direction at 145 °C, thereby obtaining a elastic web. The resulting web could resist repeated elasticity of 300% not only in longitudinal and transverse directions but also in all directions including directions at 45 degrees.

While preferred embodiments of the present invention have been described using specific terms, such description is for illustrative purposes only, and it is to be understood that changes and variations may be made without departing from the spirit or scope of the following claims.

**Claims**

1. A composite sheet comprising:

   a nonwoven fabric including nonelastic fibers aligned in one direction and having elongation of 100% or higher in a direction cross to the aligned direction of said nonelastic fibers; and a rubber elastic material bonded onto said nonwoven fabric in a pattern having orientation cross to the aligned direction of said nonelastic fibers.

2. The composite sheet according to claim 1, wherein said rubber elastic material is in the form of strands of a thermoplastic elastomer aligned cross to the aligned direction of said nonelastic fibers.

3. The composite sheet according to claim 2, wherein said strands of the thermoplastic elastomer are bonded onto said nonwoven fabric with space between them.

4. The composite sheet according to claim 3, wherein said strands are aligned substantially in parallel.

5. The composite sheet according to claim 4, wherein said fibers are aligned longitudinally in said nonwoven fabric and said strands are aligned transversely in said nonwoven fabric.

6. The composite sheet according to claim 4, wherein said fibers are aligned transversely in said nonwoven fabric and said strands are aligned longitudinally in said nonwoven fabric.

7. The composite sheet according to claim 1, wherein said pattern includes air permeable portions in long shape in a direction cross to the aligned direction of said nonelastic fibers.

8. The composite sheet according to claim 7, wherein said rubber elastic material is a web including a thermoplastic elastomer and including air holes as said air permeable portions.

9. The composite sheet according to claim 8, wherein said web is bonded onto said nonwoven fabric after said web is held at a temperature equal to or higher than a flow beginning temperature of said thermoplastic elastomer to eliminate its contractile force in a state where said web is elongated cross to the aligned direction of said nonelastic fibers.

10. The composite sheet according to claim 9, wherein said web is a film including openings long in a direction cross to the aligned direction of said nonelastic fibers, as said air holes.

**11.** The composite sheet according to claim 9, wherein said web is a nonwoven fabric including thermoplastic elastomer fibers aligned cross to the aligned direction of said nonelastic fibers.

**12.** The composite sheet according to claim 7, wherein said rubber elastic material is formed by heating powder of a thermoplastic elastomer applied onto said nonwoven fabric in said pattern at a temperature equal to or higher than a flow beginning temperature of said thermoplastic elastomer to bring said thermoplastic elastomer into close contact with said nonwoven fabric.

**13.** A method of manufacturing a composite sheet comprising the steps of:

composing a nonwoven fabric including nonelastic fibers aligned in one direction; and
bonding a rubber elastic material onto said nonwoven fabric with orientation cross to the aligned direction of said nonelastic fibers.

**14.** The method of manufacturing a composite sheet according to claim 13, wherein said step of composing the nonwoven fabric includes aligning said nonelastic fibers in a longitudinal direction of a nonwoven fabric to be formed; and
said step of bonding the rubber elastic material includes aligning strands of a thermoplastic elastomer in a width direction of said nonwoven fabric.

**15.** The method of manufacturing a composite sheet according to claim 14, wherein said bonding step includes:

forming said nonwoven fabric into a cylindrical shape;
moving said nonwoven fabric formed into a cylindrical shape in the axis direction of said cylindrical shape;
attaching a plasticized thermoplastic elastomer to an inner surface of said nonwoven fabric on the move along a circumference of said cylindrical shape; and
move solidifying the plasticized thermoplastic elastomer attached to said nonwoven fabric to provide said rubber elastic material.

**16.** The method of manufacturing a composite sheet according to claim 15, wherein said step of forming said nonwoven fabric into a cylindrical shape includes:

preparing a forming portion including a cylinder, said nonwoven fabric being supplied to an inner surface of said cylinder; and

supplying said nonwoven fabric along an inner surface wall of said cylinder.

**17.** The method of manufacturing a composite sheet according to claim 16, wherein said step of attaching a plasticized thermoplastic elastomer to an inner surface of said nonwoven fabric formed into a cylindrical shape includes:

preparing a rotary spinning head portion in a central portion of said cylinder, said rotary spinning head portion being supplied thereinto with said plasticized thermoplastic elastomer and being provided with a nozzle opened in its outer peripheral surface; and
rotating said rotary spinning head portion at the same time spinninging said plasticized thermoplastic elastomer from said nozzle to attach said thermoplastic elastomer to said nonwoven fabric supplied into said cylinder and moving therein.

**18.** The method of manufacturing a composite sheet according to claim 15, wherein said step of composing the nonwoven fabric includes aligning said nonelastic fibers in a width direction of a nonwoven fabric to be formed; and
said step of bonding the rubber elastic material includes aligning strands of a thermoplastic elastomer in a longitudinal direction of said nonwoven fabric.

**19.** The method of manufacturing a composite sheet according to claim 15, further comprising the steps of:

forming a web including a thermoplastic elastomer and including air holes;
elongating said web in one direction; and
heating said elongated web at a temperature equal to or higher than a flow beginning temperature of said thermoplastic elastomer to eliminate a contractile force of said web,
and wherein said step of bonding the rubber elastic material includes bonding said web with contractile force eliminated to said nonwoven fabric such that the aligned direction of said nonelastic fibers is cross to the elongation direction of said web.

**20.** The method of manufacturing a composite sheet according to claim 19, wherein said step of forming a web includes:

preparing a film including a thermoplastic elastomer; and
forming slits which are to serve as said air holes in said film.

**21.** The method of manufacturing a composite sheet according to claim 20, wherein said step of forming said slits includes forming slits long in the elongation direction of said web.

**22.** The method of manufacturing a composite sheet according to claim 15, wherein said step of bonding the rubber elastic material includes:

preparing powder of a thermoplastic elastomer; attaching said powder to said nonwoven fabric in a pattern having orientation cross to the aligned direction of said nonelastic fibers and having air permeable portions; heating said nonwoven fabric with said powder attached thereto at a temperature equal to or higher than a flow beginning temperature of said thermoplastic elastomer; and pressing said nonwoven fabric heated at a temperature equal to or higher than the flow beginning temperature of said thermoplastic elastomer to said powder.

**23.** The method of manufacturing a composite sheet according to claim 22, wherein said step of attaching said powder to said nonwoven fabric includes:

applying a liquid to said nonwoven fabric in said pattern; and dispersing said powder on said nonwoven fabric with said liquid attached thereto.

**24.** The method of manufacturing a composite sheet according to claim 15, wherein said step of bonding the rubber elastic material includes:

applying a liquid including a material constituting said rubber elastic material and including a cross-linking agent added thereto onto said nonwoven fabric in a pattern having orientation cross to the aligned direction of said nonelastic fibers and having air permeable portions; and drying said nonwoven fabric having said liquid applied thereto.

**25.** The method of manufacturing a composite sheet according to claim 24, further comprising the step of performing heat treatment to said nonwoven fabric having said liquid applied thereto for promoting reaction of said cross-linking agent.

**26.** A elastic web comprising one or a plurality of laminated elongated webs with its contractile force eliminated in an elongated state by holding one or a plurality of material webs including a thermoplastic elastomer and having air holes at a temperature equal to or higher than a flow beginning temperature of said thermoplastic elastomer in the elongated state.

**27.** The elastic web according to claim 26, wherein said material web is a nonwoven fabric including thermoplastic elastomer fibers.

**28.** The elastic web according to claim 26, wherein said material web is a film with holes including a thermoplastic elastomer.

**29.** The elastic web according to claim 26, wherein said material web is elongated in one direction and the air holes of said material web are slits long in the elongation direction.

**30.** The elastic web according to claim 26, wherein each of said plurality of material webs is elongated in one direction, the elongation directions of said material webs being the same or different from one another, and said plurality of elongated webs are laminated such that the elongation directions intersect.

**31.** A method of manufacturing a elastic web comprising the steps of:

forming one or a plurality of material webs including a thermoplastic elastomer and including air holes; elongating said material web in at least one direction; and heating said elongated web at a temperature equal to or higher than a flow beginning temperature of said thermoplastic elastomer to eliminate a contractile force of said material web in the elongated state.

**32.** The method of manufacturing a elastic web according to claim 31, wherein said step of forming a material web includes forming a nonwoven fabric including thermoplastic elastomer fibers.

**33.** The method of manufacturing a elastic web according to claim 31, wherein said step of forming a material web includes forming holes in a film including a thermoplastic elastomer.

**34.** The method of manufacturing a elastic web according to claim 33, wherein said holes are slits, and said step of elongating said material web includes elongating said film in a longitudinal direction of said slits.

**35.** The method of manufacturing a elastic web according to claim 31, wherein said step of elongating material webs includes elongating each of said plurality of material webs in one direction, the elongation directions of said material webs being the same or different from one another, and the method further comprising the step of overlaying said plurality of material webs with their contractile force eliminated such that the elongated directions intersect.

36. The method of manufacturing a elastic web according to claim 31, wherein said step of elongating a material web includes elongating said material web at a temperature lower than the flow beginning temperature of said thermoplastic elastomer.

37. The method of manufacturing a elastic web according to claim 31, further comprising the step of heat-pressing said material web in a state where said material web is heated at a temperature equal to or higher than the flow beginning temperature of said thermoplastic elastomer.

38. An apparatus for manufacturing a composite sheet comprising:

a spinning unit for spinning nonelastic fibers to form a nonwoven fabric having said fibers aligned in one direction;
a stretching unit for stretching the nonwoven fabric formed by said spinning unit in the same direction as the aligned direction of said fibers; and
a bonding unit for bonding a rubber elastic material onto the nonwoven fabric stretched by said stretching unit with orientation cross to the aligned direction of said fibers.

39. The apparatus for manufacturing a composite sheet according to claim 38, wherein said spinning unit includes a plurality of nozzles arranged in a width direction of a nonwoven fabric to be formed for discharging a material of said fibers in a plasticized state and carrying means for carrying the fibers discharged from said nozzle in the discharge direction of said fibers; and

said bonding unit includes a cylindrical portion supplied with said nonwoven fabric along its inner surface for forming said nonwoven fabric into a cylindrical shape, a moving mechanism for moving said nonwoven fabric supplied to said cylindrical portion along the axis direction of said cylindrical portion, and a rotary spinning head portion in a central portion of said cylindrical portion, said rotary spinning head portion being supplied thereinto with a plasticized material of said rubber elastic material and being provided with a nozzle opened in its outer peripheral surface.

40. The apparatus for manufacturing a composite sheet according to claim 38, wherein said spinning unit includes a discharge port for discharging a material of said fibers in a plasticized state, dispersing means for dispersing the material of said fibers discharged from said discharge port in a width direction of a nonwoven fabric to be formed, and carrying means for carrying said fibers dispersed from said dispersing means in a longitudinal direction of a nonwoven fabric to be formed; and

said bonding unit includes a nonwoven fabric carrying means for carrying a nonwoven fabric formed by said spinning unit and a nozzle for discharging a material of said rubber elastic material to the nonwoven fabric carried by said nonwoven fabric carrying means.

41. The apparatus for manufacturing a composite sheet according to claim 38, further comprising an elastic web forming unit for forming said rubber elastic material to be bonded to said nonwoven fabric as a web having air permeable portions.

42. The apparatus for manufacturing a composite sheet according to claim 41, wherein said elastic web forming unit includes elongating means for elongating said web in one direction and heating means for heating said elongated web at a temperature equal to or higher than a flow beginning temperature of a material of said web to eliminate a contractile force of said web, and

said bonding means bonds said web to said nonwoven fabric such that the elongation direction of said web is cross to the aligned direction of the fibers of said nonwoven fabric.

43. The apparatus for manufacturing a composite sheet according to claim 41, wherein said elastic web forming unit includes a cutter for forming slits long in one direction in film made from thermoplastic elastomer, elongating means for elongating the film having said slits formed therein in a longitudinal direction of said slits, and heating means for heating said elongated film at a temperature equal to or higher than a flow beginning temperature of said thermoplastic elastomer to eliminate a contractile force of said film, and

said bonding means bonds said film to said nonwoven fabric such that the elongation direction of said film is cross to the aligned direction of the fibers of said nonwoven fabric.

44. The apparatus for manufacturing a composite sheet according to claim 38, wherein said bonding unit includes an attacher for attaching powder of a thermoplastic elastomer as a material of said rubber elastic material onto said nonwoven fabric in a pattern having orientation cross to the aligned direction of said fibers and having air permeable portions, a heater for heating said nonwoven fabric with said powder attached thereto by said attachment unit at a temperature equal to or higher than a flow beginning temperature of said thermoplastic elastomer, and a presser for pressing said nonwoven fabric heated by said heating unit and said powder.

**45.** The apparatus for manufacturing a composite sheet according to claim 44, wherein said attachment unit includes an application roller for applying a liquid to said nonwoven fabric in said pattern and means for dispersing said powder onto said nonwoven fabric with said liquid applied thereto.

Fig.1

Fig.2

Fig.3

Fig.4

Fig.5a

Fig.5b

Fig.6

Fig.7

Fig.8

110-3    110-2    108

111'                           110-1

110-4                          111

110-5    110-6

Fig.9a

108

110

111

113

109

112

Fig.9b

108

109                  110

111

112

Fig.9c

Fig.10

Fig.11

Fig.12

Fig.13

Fig.14

NONWOVEN FABRIC       ELASTOMER WEB

1101 — SPIN FIBERS

1102 — STRETCH IN LONGITUDINAL DIRECTION

FORM TRANSVERSE SLITS — 1103

ELONGATE TRANSVERSELY — 1104

HEAT — 1105

BOND — 1106

# Fig.15

Fig.16

Fig.17

Fig.18a

Fig.18b

322

A

523

325

321

B

C

325

# Fig.19

331  523  336  331'

332  337  332'

# Fig.20

531

531a

# Fig.21a

530   530a

# Fig.21b

Fig.22a

Fig.22b

Fig.23

NONWOVEN FABRIC                    ELASTOMER WEB

1111 —| SPIN FIBERS | | FORM LONGITUDINAL SLITS |— 1113

1112 —| STRETCH IN TRANSVERSE DIRECTION | | ELONGATE LONGITUDINALLY AND HEAT |— 1114

| INCREASE WIDTH AND HEAT |— 1115

| BOND |— 1116

# Fig.24

553a

553

Fig.25a

552

552a

Fig.25b

NONWOVEN FABRIC

ELASTOMER WEB

1111 — SPIN FIBERS

ELONGATE LONGITUDINALLY — 1113'

1112 — STRETCH IN TRANSVERSE DIRECTION

FORM LONGITUDINAL SLITS — 1114'

INCREASE WIDTH — 1115'

BOND — 1116

# Fig.26

Fig.27

NONEASTIC NONWOVEN
FABRIC

ELASTOMER WEB

1121 — | SPIN FIBERS |

| FORM WEB | — 1123

1122 — | STRETCH IN TRANSVERSE DIRECTION |

| ELONGATE TRANSVERSELY | — 1124

| HEAT | — 1125

| BOND | — 1126

# Fig.28

NONEASTIC NONWOVEN
FABRIC

ELASTOMER WEB

Fig.29

Fig.30

Fig.31

Fig.32a

Fig.32b

Fig.32c

Fig.32d

Fig.32e

341

342

615

632

341

TRANSVERSE ELONGATION
ZONE

HEAT
TREATMENT
ZONE

Fig.33

EP 1 054 092 A1

620

Fig.34

710

711

711a

712

Fig.35

MANUFACTURE
NONWOVEN FABRIC

↓

PATTERN RUBBER
ELASTIC MATERRIAL

↓

HEAT

↓

PRESS

Fig.36

Fig.37

Fig.38

EP 1 054 092 A1

715

716          716a

717

Fig.39

721          721a

720              722a      722

Fig.40

Fig.41a

Fig.41b

Fig.42a

EP 1 054 092 A1

Fig.42b

**European Patent Office**

**EUROPEAN SEARCH REPORT**

Application Number

EP 00 40 1317

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 360 555 A (BASCOM HOLLIS H ET AL) 23 November 1982 (1982-11-23) * figures 6,7 * | 13,14 | D04H3/04 D04H3/12 D04H3/16 D04H3/14 D04H13/00 D04H1/74 B29C55/14 B29C55/08 |
| A | US 4 511 424 A (USUI FUMIO) 16 April 1985 (1985-04-16) * the whole document * | 15-25 | |
| D,P, A | EP 0 933 460 A (POLYMER PROCESSING RES INST ;NIPPON PETROCHEMICALS CO LTD (JP)) 4 August 1999 (1999-08-04) * claims 1,9,10 * | 1-45 | |
| A | DE 196 47 458 A (MILDENBERGER & WILLING VERPACK) 20 May 1998 (1998-05-20) * the whole document * | 1 | |
| A | WO 98 02300 A (PROCTER & GAMBLE) 22 January 1998 (1998-01-22) * figures 1,2 * | 1 | |
| A | US 5 061 545 A (PREVORSEK DUSAN C ET AL) 29 October 1991 (1991-10-29) * figures 1-9 * | 1 | TECHNICAL FIELDS SEARCHED (Int.Cl.7) D04H C09J B29C B29D |
| A | US 4 411 722 A (YAZAWA DECEASED MASAHIDE ET AL) 25 October 1983 (1983-10-25) * figures * | 14-25 | |
| A | US 5 851 935 A (SRINIVASAN RAMESH ET AL) 22 December 1998 (1998-12-22) * claim 1 * | 1 | |
| A | US 5 290 377 A (AIHARA KINTARO ET AL) 1 March 1994 (1994-03-01) * the whole document * | 1-45 | |

-/--

The present search report has been drawn up for all claims

| Place of search | Date of completion of the search | Examiner |
|---|---|---|
| THE HAGUE | 16 August 2000 | Barathe, R |

**European Patent Office**

**EUROPEAN SEARCH REPORT**

Application Number

EP 00 40 1317

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 733 460 A (POLYMER PROCESSING RES INST ;NIPPON PETROCHEMICALS CO LTD (JP)) 25 September 1996 (1996-09-25) * the whole document * | 1-45 | |
| A | EP 0 843 036 A (POLYMER PROCESSING RES INST ;NIPPON PETROCHEMICALS CO LTD (JP)) 20 May 1998 (1998-05-20) * figures * | 1 | |
| A | EP 0 814 189 A (POLYMER PROCESSING RES INST ;NIPPON PETROCHEMICALS CO LTD (JP)) 29 December 1997 (1997-12-29) * figures 2,3 * | 1 | |
| A | EP 0 688 665 A (NIPPON PETROCHEMICALS CO LTD) 27 December 1995 (1995-12-27) * the whole document * | 1 | |

TECHNICAL FIELDS SEARCHED (Int.Cl.7)

The present search report has been drawn up for all claims

| Place of search | Date of completion of the search | Examiner |
|---|---|---|
| THE HAGUE | 16 August 2000 | Barathe, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 00 40 1317

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-2000

| Patent document cited in search report | | Publication date | Patent family member(s) | | | Publication date |
|---|---|---|---|---|---|---|
| US 4360555 | A | 23-11-1982 | US | 4295905 | A | 20-10-1981 |
| | | | DE | 3044361 | A | 27-08-1981 |
| | | | FR | 2472041 | A | 26-06-1981 |
| | | | GB | 2065185 | A,B | 24-06-1981 |
| | | | IT | 1146149 | B | 12-11-1986 |
| | | | JP | 1046627 | B | 09-10-1989 |
| | | | JP | 1559807 | C | 31-05-1990 |
| | | | JP | 56123446 | A | 28-09-1981 |
| | | | US | 4372801 | A | 08-02-1983 |
| US 4511424 | A | 16-04-1985 | JP | 57197126 | A | 03-12-1982 |
| | | | AU | 8459582 | A | 07-12-1982 |
| | | | DE | 3248309 | T | 28-07-1983 |
| | | | EP | 0102392 | A | 14-03-1984 |
| | | | GB | 2110589 | A,B | 22-06-1983 |
| | | | WO | 8204219 | A | 09-12-1982 |
| | | | US | 4601774 | A | 22-07-1986 |
| EP 0933460 | A | 04-08-1999 | JP | 11222759 | A | 17-08-1999 |
| DE 19647458 | A | 20-05-1998 | NONE | | | |
| WO 9802300 | A | 22-01-1998 | US | 6074505 | A | 13-06-2000 |
| | | | AU | 3659397 | A | 09-02-1998 |
| | | | EP | 0912334 | A | 06-05-1999 |
| | | | US | 6093663 | A | 25-07-2000 |
| | | | US | 6090234 | A | 18-07-2000 |
| US 5061545 | A | 29-10-1991 | CA | 2003805 | A | 28-05-1990 |
| | | | EP | 0445222 | A | 11-09-1991 |
| | | | JP | 4502185 | T | 16-04-1992 |
| | | | WO | 9006387 | A | 14-06-1990 |
| US 4411722 | A | 25-10-1983 | JP | 835956 | C | 30-11-1976 |
| | | | JP | 50083567 | A | 05-07-1975 |
| | | | JP | 51009067 | B | 23-03-1976 |
| | | | DE | 2456109 | A | 12-06-1975 |
| | | | FR | 2253117 | A | 27-06-1975 |
| | | | GB | 1464785 | A | 16-02-1977 |
| | | | IT | 1023317 | B | 10-05-1978 |
| US 5851935 | A | 22-12-1998 | AU | 4238497 | A | 19-03-1998 |
| | | | EP | 0921941 | A | 16-06-1999 |
| | | | WO | 9808678 | A | 05-03-1998 |
| | | | US | 6025050 | A | 15-02-2000 |

**ANNEX TO THE EUROPEAN SEARCH REPORT
ON EUROPEAN PATENT APPLICATION NO.**                    EP 00 40 1317

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-2000

| Patent document cited in search report | | Publication date | Patent family member(s) | | Publication date |
|---|---|---|---|---|---|
| US 5290377 | A | 01-03-1994 | JP | 2983584 B | 29-11-1999 |
| | | | JP | 4082953 A | 16-03-1992 |
| | | | DE | 4123715 A | 20-02-1992 |
| EP 0733460 | A | 25-09-1996 | JP | 8260232 A | 08-10-1996 |
| | | | JP | 8260331 A | 08-10-1996 |
| | | | US | 6054086 A | 25-04-2000 |
| EP 0843036 | A | 20-05-1998 | JP | 10204767 A | 04-08-1998 |
| EP 0814189 | A | 29-12-1997 | JP | 10008369 A | 13-01-1998 |
| | | | US | 5789328 A | 04-08-1998 |
| EP 0688665 | A | 27-12-1995 | JP | 8001840 A | 09-01-1996 |
| | | | JP | 8001842 A | 09-01-1996 |
| | | | JP | 8174764 A | 09-07-1996 |
| | | | KR | 162706 B | 01-12-1998 |
| | | | US | 5702798 A | 30-12-1997 |

EPO FORM P0459